# EUROPEAN PATENT SPECIFICATION

(11) **EP 4 244 971 B1**
(45) Date of publication and mention of the grant of the patent: **28.10.2026**
(21) Application number: 20838483.4
(22) Date of filing: 18.12.2020
(51) Int. Cl.: H02M 7/483, H02M 3/07, H02M 1/00, H02M 1/32

(54) **METHOD FOR OPERATING A MULTILEVEL FLYING CAPACITOR CONVERTER**
VERFAHREN ZUM BETRIEB EINES LEISTUNGSWANDLERS MIT FLIEGENDEN KONDENSATOREN
MÉTHODE DE FONCTIONNEMENT D'UN CONVERTISSEUR MULTINIVEAUX À CONDENSATEURS VOLANTS

(43) Date of publication of application: 20.09.2023
(73) Proprietor: Huawei Technologies Co., Ltd., Shenzhen, Guangdong 518129 (CN)
(72) Inventor: WIJEKOON, Piniwan, Thiwanka, Bandara, 80992 Munich (DE); TCAI, Anatolii, 80992 Munich (DE)
(74) Representative: Körber, Martin Hans
(86) International application number: PCT/EP2020/087316
(87) International publication number: WO 2022/128134

(56) References cited:
- KR-A- 20150 078 815
- US-A1- 2017 331 374
- US-A1- 2020 350 817
- WANG KUI ET AL: "Voltage Balancing Control of a Four-Level Hybrid-Clamped Converter Based on Zero-Sequence Voltage Injection Using Phase-Shifted PWM", IEEE TRANSACTIONS ON POWER ELECTRONICS, INSTITUTE OF ELECTRICAL AND ELECTRONICS ENGINEERS, USA, vol. 31, no. 8, 1 August 2016 (2016-08-01), pages 5389 - 5399, XP011608637, ISSN: 0885-8993, [retrieved on 20160302], DOI: 10.1109/TPEL.2015.2491779
- MILOVANOVIC STEFAN ET AL: "On Power Scalability of Modular Multilevel Converters: Increasing Current Ratings Through Branch Paralleling", IEEE POWER ELECTRONICS MAGAZINE, IEEE, USA, vol. 7, no. 2, 1 June 2020 (2020-06-01), pages 53 - 63, XP011793975, ISSN: 2329-9207, [retrieved on 20200615], DOI: 10.1109/MPEL.2020.2984350
- GONCALVES JORGE ET AL: "Submodule Temperature Regulation and Balancing in Modular Multilevel Converters", IEEE TRANSACTIONS ON INDUSTRIAL ELECTRONICS, IEEE SERVICE CENTER, PISCATAWAY, NJ, USA, vol. 65, no. 9, 1 September 2018 (2018-09-01), pages 7085 - 7094, XP011682690, ISSN: 0278-0046, [retrieved on 20180501], DOI: 10.1109/TIE.2018.2795588

## Description

### TECHNICAL FIELD

The present disclosure relates to a method for operating a multilevel flying capacitor converter, which may be operated as a two-level converter.

### BACKGROUND

The field of the present disclosure is related to converters (may be referred to as power converters) and a method for operating such converters. Such converters may be used in power supplies, such as data centre power supplies, solar photo voltaic (PV) inverters, charging systems (e.g. electric vehicle (EV) charging stations) and similar applications providing electric power to electric devices. Document US 2017/331374 A1 discloses a multiple output boost DC-DC power converter.

### SUMMARY

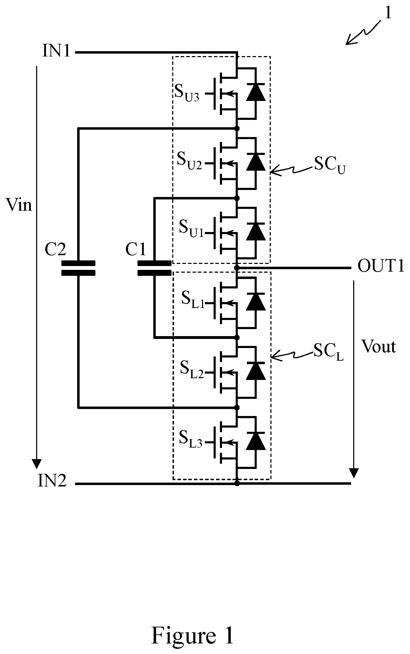

In particular, embodiments of the invention base on the following considerations made by the inventors:
Quasi operation of a multilevel flying capacitor topology is one alternative concept to realize an effective medium voltage (MV) switch to gain Cost, Density and Efficiency (CDE) benefit for high power MV converters. Figure 1 shows an example of such a converter with a multilevel flying capacitor topology/structure. That is, the converter corresponds to a multilevel converter. A multilevel converter may be used to convert a voltage from AC to DC or vice versa with the implementation of intermediate voltage levels for better representation of the AC voltage. Key reason to use such a multilevel converter is to equally divide the maximum voltage between the switches with lower voltage class of the converter.

The converter of Figure 1 may be operated as a two-level converter. That is, the switches of the converter may be controlled respectively switched such that the output terminal OUT1 of the converter 1 may provide an output voltage Vout variable between a first voltage level and a second voltage level. The first voltage level may correspond to the voltage level applied to a first input terminal IN1 of the converter 1 and the second voltage level may correspond to the voltage level applied to a second input terminal IN2 of the converter 1. The voltage Vin (may also be referred to as input voltage) applied to the input, in particular received by the first and second input terminal IN1 and IN2, of the converter 1 corresponds to the difference between the first voltage level and the second voltage level. In other words, the input voltage Vin received by the first and second input terminal corresponds to the voltage that is applied between the first and second input terminal IN1 and IN2 of the converter 1. In particular, the switches of the converter may be controlled such that at a first steady state of the converter 1 the output voltage Vout of the converter 1 equals to the first voltage level, and at a second steady state of the converter 1 the output voltage Vout equals to the second voltage level.

The output voltage Vout of the converter may potentially equal to more than two voltage levels, in particular to two additional voltage levels between the first voltage level and the second voltage level in the case of the converter structure shown in Figure 1. Thus, operating the converter 1 of Figure 1 as a two-level converter may also be referred to as operating the converter 1 as a quasi-two-level (Q2L) converter. The two additional voltage levels may in particular correspond to the voltage across the capacitor unit C1 and the voltage across the capacitor unit C2 of the converter 1. The two-level configuration allows using low voltage semiconductor devices, in particular low voltage semiconductor switches for the switches of the converter, to reduce the costs of the converter and to increase the effective operational voltage level.

One application example of the present disclosure may be, the electric energy generated from a solar PV plant is to be translated to a higher voltage for efficient transmission. Typically, these higher voltage levels may be 10kV, 20kV or 35kV. The semiconductor devices, in particular semiconductor switches, in order to withstand such high level of the required voltage range are not available. Thus, different multilevel configurations based on low voltage devices, in particular low voltage switches, may be used to obtain the required voltage range. A flying capacitor topology, as exemplarily shown in Figure 1, is one possible example of a multilevel configuration.

The flying capacitor configuration with typical multilevel operation requires large capacitor banks to store the power needed for intermediate voltage levels. Whereas quasi-two-level operation (that is operating a multi-level converter as a two-level converter) use a small amount of the capacitance during transitions (may also be referred to as transitions phases) between the first steady state and the second steady state of the converter. This significantly decreases the required size of the capacitor banks and increases the efficiency and power density (volumetric and weight).

The lifetime of the converter is dependent on the health state (also referred to as state of health) of each component of the converter. The switches (may also be referred to as switching devices) of the converter, in particular in the form of transistors and diodes, are the most vulnerable components due to the constant stress coming from the switching behaviour and internal resistance. This stress is caused by power losses generated while in operation and resulted in as a thermal heat and is measured in watts.

Due to non-ideal behaviour of the components these thermal stress is not equally distributed. As a result, after some time of exploitation, the health state of some transistors is significantly shortened than the health state of others.

In particular, the switches are not ideal and may have slightly different characteristics such as on-resistance, gate threshold voltage, turn-on/turn-off times and thermal impedance. Moreover, the thermal interface of a switch has microscopic imperfections which can trap air particles between the case and the heatsink. This degrades the thermal impedance between the switch and external heat sink. Due to these reasons, the thermal stress on the switches of the converter is not equally distributed among the switches of the converter. Therefore, after some time of constant operation, the health state of some switches is considerably lower than the health state of the other devices. The health state and, thus, life time of the converter depends on the component with the worst health state and, thus, worst/shortest life time. That is, as soon as the health state and, thus, life time of a single switch of the converter decreases the health state and, thus, life time of the converter correspondingly decreases.

In view of the above-mentioned problems and disadvantages, embodiments of the invention aim to improve the above describe problems. In particular, an objective is to provide a method for operating a converter that allows to increase the life time of a converter.

The objective is achieved by the features of claim 1.

Advantageous implementations of the embodiments of the invention are further defined in the dependent claims. In particular, embodiments of the invention achieve the above objective by redistributing some of the stress, in particular thermal stress, from switches with low health state to switches with higher health state.

A first aspect of the present disclosure provides a method according to claim 1 for operating a converter. The converter comprises a first and second input terminal for receiving a DC voltage, an output terminal for providing an output voltage variable between a first voltage level and a second voltage level, a first and second series connection of two or more switches that are semiconductor switches, and one or more capacitor units. The first input terminal is electrically connected via the first series connection of the two or more switches to the output terminal. The second input terminal is electrically connected via the second series connection of the two or more switches to the output terminal. Each of the one or more capacitor units electrically connects a first node between two switches of the first series connection and a second node between two switches of the second series connection with each other, wherein the number of nodes between the first node and the output terminal and the number of nodes between the second node and the output terminal are equal to each other. The DC voltage is equally distributable to the switches of the first and second series connection by controlling the switches such that each of the one or more capacitor units is charged to a respective third voltage level. The method comprises the following step: compensating different power losses of the switches by controlling the switches such that one or more of the one or more capacitor units are charged above the respective third voltage level, and/or that one or more of the one or more capacitor units are charged below the respective third voltage level, so that the DC voltage is not equally distributed to the switches. The method further comprises the following steps: determining a combined power loss of each switch pair comprising a first switch of the first series connection and a second switch of the second series connection, wherein the number of switches between the first switch and the output terminal and the number of switches between the second switch and the output terminal are equal to each other; determining a switch pair with the highest combined power loss among the combined power losses of the switch pairs of the first and second series connection; and controlling the switches such that a portion of the DC voltage distributed to the first switch and second switch of the switch pair with the highest combined power loss is reduced.

In other words, according to the method of the first aspect, the switches are controlled such that one or more of the one or more capacitor units are charged above the respective third voltage level and/or that one or more of the one or more capacitor units are charged below the respective third voltage level. As a result thereof, the DC voltage is not equally distributed to the switches, which allows compensating different power losses of the switches.

Therefore, the method allows redistributing some of the stress, in particular thermal stress, from switches with low health state to switches with higher health state. As a result, the method allows improving the life time of the converter, which depends on the switch with the worst health state and, thus, worst/shortes life time.

The terms "electrically connect" and "connect" may be used as synonyms.

The method is a method for operating a multilevel converter. That is, the converter is a multilevel converter. In particular, the method is a method for operating a multilevel converter as a two-level or three-level converter. The converter may be a DC/AC or DC/DC converter.

In particular, the one or more capacitor units are electrically connected to different first nodes and second nodes. That is, to each first node and second node only one capacitor unit of the one or more capacitor units is electrically connected.

In particular, the number of capacitor units is one less than the number of switches of the first series connection respectively second series connection.

The switches, being semiconductor switches, of the converter may be transistors, such as one or more insulated-gate bipolar transistors (IGBTs), one or more field-effect transistors (FETs), one or more metal-oxide-semiconductor field-effect transistors (MOSFETs), one or more bipolar junction transistors (BJTs) and/or one or more junction gate field-effect transistors (JFETs). The switches of the converter may be of the same transistor type or may correspond to at least two different transistor types. In particular, a diode may be electrically connected in anti-parallel to the switches, in particular in case of the switches being one or more IGBTs and/or MOSFETs. The diode may be an intrinsic body diode of a respective transistor. In particular, the switches are power switches.

Each capacitor unit may correspond to a capacitor. Alternatively, each capacitor unit may correspond to two capacitors electrically connected in series. In case each capacitor unit corresponds to two capacitors electrically connected in series, the converter may comprise a series connection of two capacitors electrically connecting the first input terminal and second input terminal of the converter with each other.

The output voltage may be variable between the first voltage level at the first steady state of the converter and the second voltage level at the second steady state of the converter.

The DC voltage may be equally distributable to the switches of the first and second series connection by controlling the switches such that, during the one or more transition phases between the first steady state and second steady state of the converter, each of the one or more capacitor units is charged to the respective third voltage level

In an implementation form of the first aspect, the method comprises the following step: determining the power loss of one or more of the switches by measuring the temperature of the respective switch as an indicator of the power loss of the respective switch. In particular, the method may comprise the following step: determining the power loss of each of the switches by measuring the temperature of the respective switch as an indicator of the power loss of the respective switch.

In particular, the power loss of a switch is the switching power loss of the switch. That is, the power loss of a switch in particular refers to the switching power loss of the switch.

In particular, the higher the temperature of a switch the higher is the power loss of the switch. In particular, the higher the power loss of a switch, the higher is the stress on the switch and, thus, the worse is the health state of the switch.

In an implementation form of the first aspect, the method comprises the following steps: determining a switch with the highest power loss among the power losses of the switches; and controlling the switches such that a portion of the DC voltage distributed to the switch with the highest power loss is reduced.

By reducing the portion of the DC voltage distributed to the switch with the highest power loss, the switching power loss of said switch is reduced.

In an implementation form of the first aspect, the method comprises the following step: controlling the switches such that the portion of the DC voltage distributed to the switch with the highest power loss is reduced and the rest of the DC voltage is equally distributed to the rest of the switches.

By reducing the portion of the DC voltage distributed to the first switch and second switch of the switch pair with the highest combined power loss, the switching power loss of said first switch and second switch is reduced.

In an implementation form of the first aspect, the method comprises the following step: controlling the switches such that the portion of the DC voltage distributed to the first switch and second switch of the switch pair with the highest combined power loss is reduced and the rest of the DC voltage is equally distributed to the rest of the switches.

In an implementation form of the first aspect, the method comprises the following step: determining the combined power loss of one or more of the switch pairs by determining the sum of the temperature of the first switch of the respective switch pair and the temperature of the second switch of the respective switch pair as an indicator for the combined power loss of the respective switch pair. In particular, the method may comprise the following step: determining the combined power loss of each of the switch pairs by determining the sum of the temperature of the first switch of the respective switch pair and the temperature of the second switch of the respective switch pair as an indicator for the combined power loss of the respective switch pair.

In particular, the higher the sum of the temperatures of the two switches of a switch pair the higher is the power loss of the switch pair. In particular, the higher the power loss of a switch pair, the higher is the stress on the switches of the switch pair and, thus, the worse is the health state of the switch pair.

In an implementation form of the first aspect, for reducing a portion of the DC voltage distributed to a switch that is electrically connected to the output terminal, the method comprises the following step: controlling the switches such that a capacitor unit of the one or more capacitor units is charged below the respective third voltage level, wherein the capacitor unit is electrically connected to the first node of the first series connection and second node of the second series connection that are closest, in terms of the number of nodes, to the output terminal.

A switch that is electrically connected to the output terminal may be referred to as output switch or third switch. The capacitor unit, which is electrically connected to the first node of the first series connection and second node of the second series connection that are closest, in terms of the number of nodes, to the output terminal, may be referred to as output capacitor unit or third capacitor unit.

In particular, the less the capacitor unit (output capacitor unit) is charged below the respective third voltage level the more the portion of the DC voltage distributed to the switch (output switch) is reduced.

That is, the smaller/lower the voltage level, to which the capacitor unit (output capacitor unit) is charged, below the respective third voltage level the more the switching power loss of the switch (output switch) may be reduced.

In particular, for reducing the portion of the DC voltage distributed to the switch (output switch), the method comprises the following step: controlling the switches such that the capacitor unit (output capacitor unit) of the one or more capacitor units gets charged or discharged below the respective third voltage level. Optionally, for reducing the portion of the DC voltage distributed to the switch (output switch), the method comprises the following step: controlling the switches such that the capacitor unit (output capacitor unit) of the one or more capacitor units gets charged or discharged below the respective third voltage level during the one or more transition phases.

In particular, the less the capacitor unit (output capacitor unit) gets charged below the respective third voltage level the more the portion of the DC voltage distributed to the switch (output switch) is reduced. In particular, the more the capacitor unit (output capacitor unit) gets discharged below the respective third voltage level the more the portion of the DC voltage distributed to the switch (output switch) is reduced.

That is, the smaller/lower the voltage level, to which the capacitor unit (output capacitor unit) gets charged to, below the third voltage level the more the switching power loss of the switch (output switch) may be reduced. The smaller/lower the voltage level, to which the capacitor unit (output capacitor unit) gets discharged to, below the third voltage level the more the switching power loss of the switch (output switch) may be reduced.

In particular, the capacitor unit (output capacitor unit) may get charged in case the capacitor unit (output capacitor unit) is discharged, i.e. not already charged. In particular, the capacitor unit (output capacitor unit) may get discharged in case the capacitor unit (output capacitor unit) is already charged to the third voltage level or above the third voltage level.

In an implementation form of the first aspect, for reducing a portion of the DC voltage distributed to a switch that is electrically connected via one or more switches to the output terminal, the method comprises the following step: controlling the switches such that a first capacitor unit of the one or more capacitor units is charged above the respective third voltage level, wherein the first capacitor unit is connected to a terminal of two terminals of the switch that is closer, in terms of the number of nodes, to the output terminal; and/or controlling the switches such that a second capacitor unit of the one or more capacitor units is charged below the respective third voltage level, wherein the second capacitor unit is connected to the other terminal of the two terminals of the switch.

A switch that is electrically connected via one or more switches to the output terminal may be referred to as fourth switch.

In particular, the more the first capacitor unit is charged above the respective third voltage level the more the portion of the DC voltage distributed to the switch (fourth switch) is reduced; and/or the less the second capacitor unit is charged below the respective third voltage level the more the portion of the DC voltage distributed to the switch (fourth switch) is reduced.

In particular, for reducing the portion of the DC voltage distributed to the switch (fourth switch), the method comprises the following step: controlling the switches such that the first capacitor unit of the one or more capacitor units gets charged above the respective third voltage level, optionally during the one or more transition phases; and/or controlling the switches such that the second capacitor unit of the one or more capacitor units gets charged or discharged below the respective third voltage level, optionally during the one or more transition phases.

In other words, charging of the first capacitor unit of the one or more capacitor units above the respective third voltage level may optionally be performed/occur during the one or more transition phases. The additionally or alternatively charging or discharging of the second capacitor unit of the one or more capacitor units below the respective third voltage level may optionally be performed/occur during the one or more transition phases.

In particular, the more the first capacitor unit gets charged above the respective third voltage level, the more the portion of the DC voltage distributed to the switch (fourth switch) is reduced. In particular, the less the second capacitor unit gets charged below the respective third voltage level the more the portion of the DC voltage distributed to the switch (fourth switch) is reduced. In particular, the more the second capacitor unit gets discharged below the third voltage level the more the portion of the DC voltage distributed to the switch (fourth switch) is reduced.

In particular, the higher the number of nodes between the output terminal and the first node, to which a capacitor unit is connected to, the greater is the respective third voltage level of the capacitor unit.

It has to be noted that all devices, elements, units and means described in the present application could be implemented in software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF DRAWINGS

The above described aspects and implementation forms will be explained in the following description of specific embodiments in relation to the enclosed drawings, in which
- **Figure 1**: shows an example of a structure of a converter according to an embodiment of the invention.
- **Figure 2**: shows three different switching states of the converter of Figure 1, when operating the converter of Figure 1 according to an example of the method according to an embodiment of the invention.
- **Figure 3**: shows voltage curves over time present in the converter of Figure 1, when operating the converter of Figure 1 according to an example of the method according to an embodiment of the invention. In particular, Figure 3a shows voltage curves over time for upper switches S_{U1}, S_{U2} and S_{U3} of the converter presented in Figure 1, and Figure 3b shows a voltage curve over time for the output voltage of the converter presented in Figure 1.
- **Figures 4 and 5**: each show two examples of a structure of a converter according to an embodiment of the invention.
- **Figure 6**: shows voltage curves over time of voltages present in the converter of Figure 1, when operating the converter of Figure 1 according to an example of the method according to an embodiment of the invention.
- **Figure 7**: shows three different switching states of the converter of Figure 1, when operating the converter of Figure 1 according to an example of the method according to an embodiment of the invention.
- **Figure 8**: shows three different switching states of the converter of Figure 1, when operating the converter of Figure 1 according to an example of the method according to an embodiment of the invention.
- **Figure 9**: shows an example of a part, of a control unit according to an embodiment of the invention, for determining power loss of the switches of the converter of Figure 1.
- **Figure 10**: shows two examples of a structure of a converter according to an embodiment of the invention.
- **Figures 11, 12 and 13**: each show an example of a structure of a converter according to an embodiment of the invention.

In the Figures corresponding elements are labeled with the same reference sign.

### DETAILED DESCRIPTION OF EMBODIMENTS

**Figure** 1 shows an example of a structure of a converter according to an embodiment of the invention.

The above description of the converter according to the third aspect is correspondingly valid for the converter 1 of Figure 1. For operating the converter 1 of Figure 1 according to the method of the first aspect, reference is made to the above description of the method of the first aspect.

The converter 1 of Figure 1 may be implemented as described above with respect to the converter of the third aspect and as shown in Figure 1. That is, the converter 1 comprises a first input terminal IN1 and second input terminal IN2 for receiving a DC voltage Vin and an output terminal OUT1 for providing an output voltage Vout that is variable between a first voltage level and a second voltage level.

The converter 1 further comprises a first series connection SC_{U} of three switches S_{U3}, S_{U2}, S_{U1} that are semiconductor switches and a second series connection SC_{L} of three switches S_{L1}, S_{L2}, S_{L3} that are semiconductor switches. The number of switches of each of the first series connection SC_{U} and second series connection SC_{L} shown in Figure 1 is only by way of example and may be only two switches or more than two switches. As shown in Figure 1, the switches S_{U3}, S_{U2}, S_{U1}, S_{L1}, S_{L2}, S_{L3} of the converter 1 are MOSFETs with a diode connected in antiparallel to each MOSFET. This is only by way of example and, thus, the switches may correspond to different semiconductor switches, in particular transistors. As indicated in Figure 1, the number of switches of the first series connection SC_{U} equals to the number of switches of the second series connection SC_{L}.

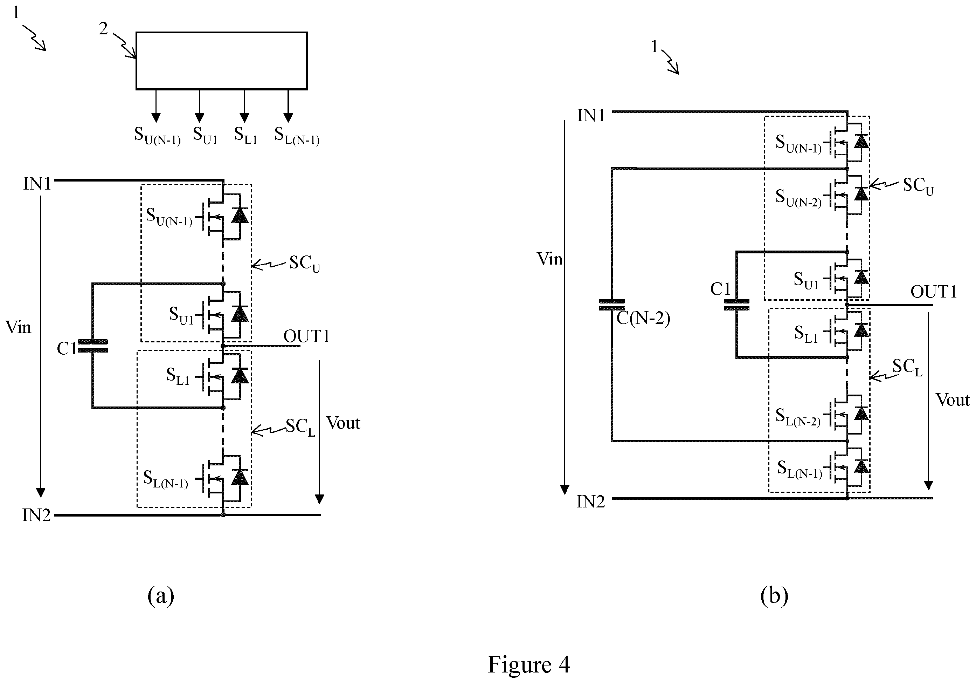

The converter 1 further comprises two capacitor units C1 and C2. This is only by way of example and, thus, the number of capacitor units of the converter 1 may be only one capacitor unit or more than two capacitor units. In particular, the number of capacitor units is one less than the number of switches of the first series connection SC_{U} respectively second series connection SC_{L}. Each capacitor unit C1, C2 comprises or corresponds to a capacitor as shown in Figure 1. The capacitor may optionally be implemented by one or more capacitor elements electrically connected in series and/or in parallel. Furthermore, the converter 1 comprises a control unit (in Figure 1 not shown, exemplarily shown in Figure 4a) for controlling the switches of the converter 1.

As shown in Figure 1, the first input terminal IN1 is electrically connected via the first series connection SC_{U}, in particular the three switches S_{U3}, S_{U2}, S_{U1} of the first series connection SC_{U}, to the output terminal OUT1. The second input terminal IN2 is electrically connected via the second series connection SC_{L}, in particular the three switches S_{L1}, S_{L2}, S_{L3} of the second series connection SC_{L}, to the output terminal OUT1. Each of the two capacitor units C1, C2 electrically connects a first node between two switches of the first series connection SC_{U} and a second node between two switches of the second series connection SC_{L} with each other, wherein the number of nodes between the first node and the output terminal OUT1 and the number of nodes between the second node and the output terminal OUT2 are equal to each other. For example, as shown in Figure 1, the capacitor unit C1 connects the node (may be referred to as first node) between the switches S_{U2} and S_{U1} of the first series connection SC_{U} and the node (may be referred to as second node) between the switches S_{L1} and S_{L2} of the second series connection SC_{L} with each other. The number of nodes between the output terminal OUT1 and the node between the switches S_{U2} and S_{U1} equals to the number of nodes between the output terminal OUT1 and the node between the switches S_{L1} and S_{L2}. Namely, this number is equal to zero nodes.

The control unit is configured to equally distribute the DC voltage Vin to the switches S_{U3}, S_{U2}, S_{U1}, S_{L1}, S_{L2}, S_{L3} of the first and second series connection SC_{U} and SC_{L} by controlling the switches S_{U3}, S_{U2}, S_{U1}, S_{L1}, S_{L2}, S_{L3} such that each of the capacitor units C1, C2 is charged to a respective third voltage level. The control unit is configured to compensate different power losses of the switches S_{U3}, S_{U2}, S_{U1}, S_{L1}, S_{L2}, S_{L3} by controlling the switches S_{U3}, S_{U2}, S_{U1}, S_{L1}, S_{L2}, S_{L3} such that one or more of the capacitor units C1, C2 are charged above the respective third voltage level, and/or that one or more of the capacitor units C1, C2 are charged below the respective third voltage level, so that the DC voltage Vin is not equally distributed to the switches S_{U3}, S_{U2}, S_{U1}, S_{L1}, S_{L2}, S_{L3}. The control unit is in particular configured to perform the method of the first aspect, as described above, for controlling the switching of the switches S_{U3}, S_{U2}, S_{U1}, S_{L1}, S_{L2}, S_{L3} of the converter 1.

In the converter of Figure 1 a switch (first switch) of the first series connection SC_{U} and a switch (second switch) of the second series connection SC_{L} form a switch pair, when the number of switches between the switch of the first series connection SC_{U} and the output terminal OUT1 equals to the number of switches between the switch of the second series connection SC_{L} and the output terminals. Therefore, the switches S_{U1} and S_{L1}, the switches S_{U2} and S_{L2} and the switches S_{U3} and S_{L3} each form a switch pair. When controlling the switches of the converter 1, the switches of each switch pair may be inversely controlled. That is, when a switch of a switch pair is in the conducting state then the other switch of the switch pair may be in the non-conducting state and vice versa.

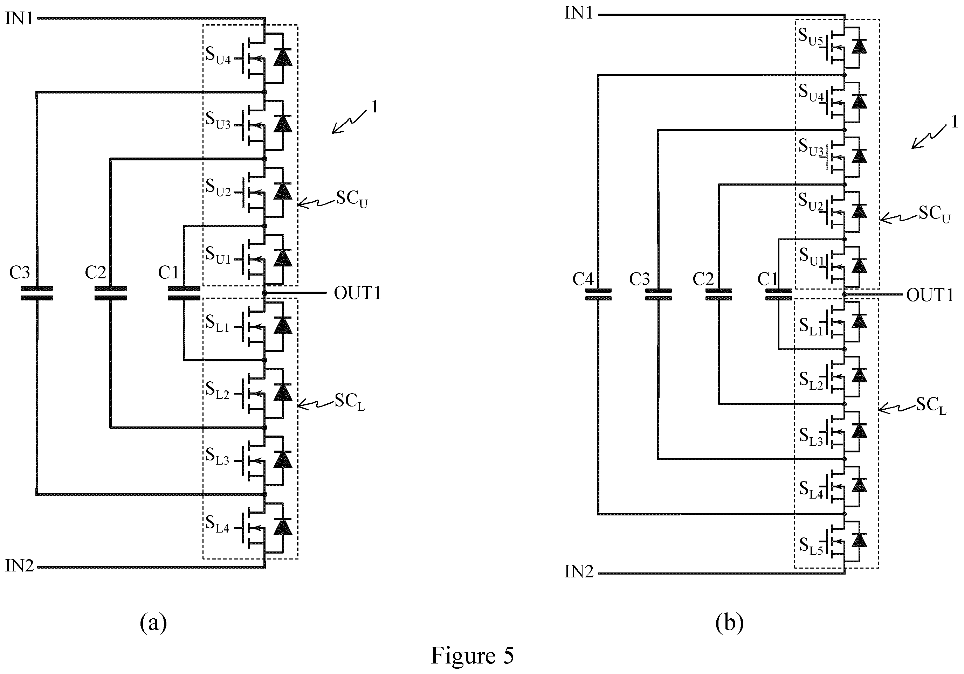

Before describing examples of operation of the converter according to embodiments of the invention, reference is made to the Figures 4 and 5 with regard to the fact that the number of switches and capacitor units of the converter 1 is not limited to the number shown in Figure 1, as already outlined above.

Figures 4 and 5 each show two examples of a structure of a converter according to an embodiment of the invention. The converter structures of Figures 4 and 5 correspond to the converter structure of Figure 1 only differing in the number of switches and capacitor units of the converter. Therefore, the description with regard to the converter of Figure 1 is correspondingly valid for the converters of Figures 4 and 5.

The first series connection SC_{U} and second series connection SC_{L} of switches of the converter 1 of Figure 4a each comprise two or more switches S_{U(N-1)},...,S_{U1} respectively S_{L(N-1)},...,S_{L1}. The converter 1 of Figure 4a comprises at least one capacitor unit C1. In Figure 4a, the control unit 2 of the converter for controlling the switches S_{U(N-1)},...,S_{U1}, S_{L(N-1)},...,S_{L1} of the converter 1 is exemplarily shown. As indicated by arrows, the control unit 2 is configured to control each of the switches S_{U(N-1)},...,S_{U1}, S_{L(N-1)},...,S_{L1} of the two series connections of switches SC_{U} and SC_{L}.

The first series connection SC_{U} and second series connection SC_{L} of switches of the converter 1 of Figure 4b each comprise three or more switches S_{U(N-1)}, S_{U(N-2)},...,S_{U1} respectively S_{L(N-1)}, S_{L(N-2),}...,S_{L1}. The converter 1 of Figure 4b comprises at least two capacitor units C(N-2) and C1.

Thus, according to Figure 4 the number of switches of each series connection of switches SC_{U} and SC_{L} corresponds to N-1 (that is the number of switches of the converter corresponds to 2*(N-1)) and the number of capacitor units corresponds to N-2, wherein N is an integer greater or equal to three (N > 3). As can be seen from Figures 4 (a) and (b), the number of capacitor units (N-2) is one less than the number of switches (N-1) of the first series connection SC_{U} respectively second series connection SC_{L}. Depending on the number of switches of each series connection SC_{U}, SC_{L} respectively capacitor units the converter may be referred to as N-stage converter, in particular as N-stage two-level converter or N-stage quasi-two-level (Q2L) converter. That is, in case of each series connection SC_{U} and SC_{L} of the converter comprising two switches, the converter may be referred to as three-stage (3-stage) converter. In the case of each series connection SC_{U} and SC_{L} of the converter comprising three switches, the converter may be referred to as four-stage (4-stage) converter and so on.

The first series connection SC_{U} and second series connection SC_{L} of switches of the converter 1 of Figure 5a each comprise four switches S_{U4}, S_{U3}, S_{U2}, S_{U1} respectively S_{L4}, S_{L3}, S_{L2}, S_{L1}. The converter 1 of Figure 5a comprises three capacitor units C1, C2 and C3. Thus, the converter 1 of Figure 5a may be referred to as five-stage (5-stage) converter. The first series connection SC_{U} and second series connection SC_{L} of switches of the converter 1 of Figure 5b each comprise five switches S_{U5}, S_{U4}, S_{U3}, S_{U2}, S_{U1} respectively S_{L5}, S_{L4}, S_{L3}, S_{L2}, S_{L1}. The converter 1 of Figure 5b comprises four capacitor units C1, C2, C3 and C4. Thus, the converter 1 of Figure 5b may be referred to as six-stage (6-stage) converter. The number of switches and capacitors units is not limited and may be further increased based on the device voltage class and the required effective voltage. That is, the higher the number of switches the lower may be the voltage class of the switches for a respective voltage Vin applied to the input IN1, IN2 of the converter.

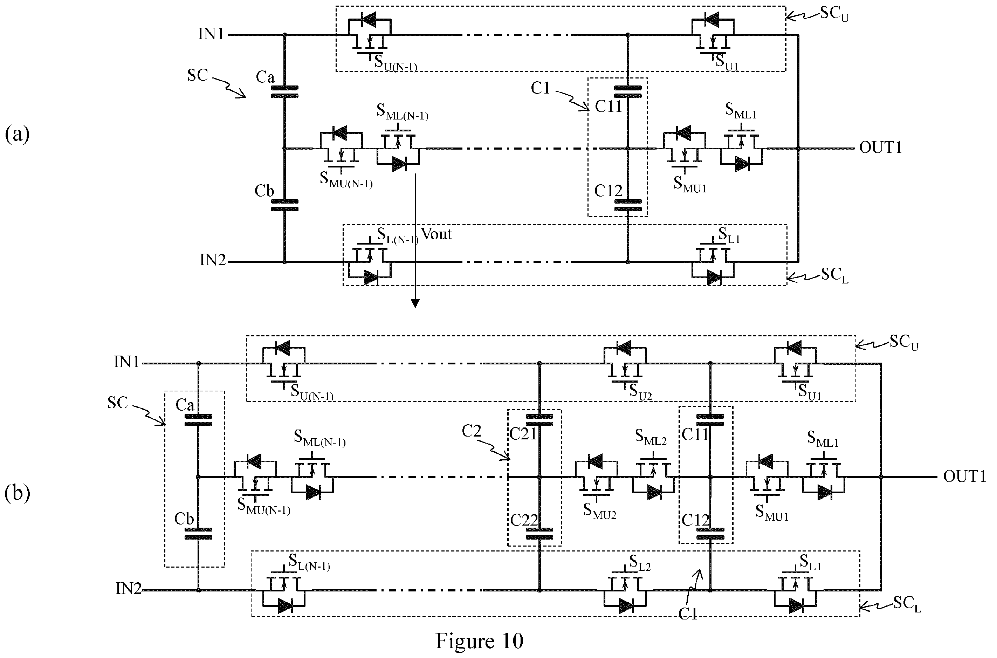

Figures **10****,** **11****,** **12** **and** **13** show a further converter structure, which may be referred to as nested T-type converter. The nested T-type converter structure basically corresponds to the converter structure shown in Figures 1, 4 and 5, with the difference that in the case of the nested T-type converter structure, each capacitor unit corresponds to two capacitors electrically connected in series. One or both of the two capacitors may optionally be implemented by one or more capacitor elements electrically connected in series and/or in parallel. Furthermore, the converter of Figures 10, 11, 12 and 13 comprise a series connection SC of two capacitors Ca and Cb electrically connecting the first input terminal IN1 and second input terminal IN2 of the converter 1 with each other. The above description of the Figures 1, 4 and 5 is correspondingly valid for the converters of Figures 10, 11, 12 and 13.

**Figure 10** shows two example of a structure of a converter according to an embodiment of the invention. Figure 10 (a) shows a nested T-type converter structure that corresponds to the converter structure of Figure 4a. Thus, reference is made to the above description of Figure 4a for describing the converter of Figure 10a and in the following, only the differences are described. The at least one capacitor unit C1 corresponds to two capacitors C11 and C12 electrically connected in series. In addition, as shown in Figure 10a the node between the two capacitors Ca and Cb of the series connection SC, the node between the two capacitors C11 and C12 of the at least one capacitor unit C1 and the output terminal OUT1 may be connected to each other by at least two bi-directional switches. Each bi-directional switch may comprise two transistors S_{MU(N-1)}, S_{ML(N-1)} respectively S_{MU1}, S_{ML1} with optionally a diode connected in antiparallel to each transistor. The bidirectional switches may also be implemented differently, in particular using one or more different transistor types.

Figure 10 (b) shows a nested T-type converter structure that corresponds to the converter structure of Figure 4b. Thus, reference is made to the above description of Figure 4b for describing the converter of Figure 10b and in the following, only the differences are described. The at least two capacitor units C1 and C2 each correspond to two capacitors C11, C12 respectively C21, C22 electrically connected in series. In addition, as shown in Figure 10b the node between the two capacitors Ca and Cb of the series connection SC, the node between the two capacitors C21 and C22 of the capacitor unit C2, the node between the two capacitors C11 and C12 of the capacitor unit C1 and the output terminal OUT1 may be connected to each other by at least three bi-directional switches. Each bi-directional switch may comprise two transistors S_{MU(N-1)}, S_{ML(N-1)} respectively S_{MU2}, S_{ML2} respectively S_{MU1}, S_{ML1} with optionally a diode connected in antiparallel to each transistor. The bidirectional switches may also be implemented differently, in particular using one or more different transistor types.

Thus, according to Figure 10 the number of switches of each series connection of switches SC_{U} and SC_{L} corresponds to N-1 and the number of optional bidirectional switches connecting the nodes between two capacitors and the output terminal OUT1 corresponds to N-1, wherein N is an integer greater or equal to three (N > 3).

Depending on the number of switches of each series connection SC_{U}, SC_{L} the converter may be referred to as (2*N+1)-level nested T-type converter ((2*N+1)-L-NTT converter). That is, in case of each series connection SC_{U} and SC_{L} of the converter comprising two switches, the converter may be referred to as five-level (5-level) nested T-type converter. In the case of each series connection SC_{U} and SC_{L} of the converter comprising three switches, the converter may be referred to as seven-level (7-level) nested T-type converter and so on.

The nested T-type converters of Figures 10 may be operated as a three-level converter. That is, the switches of the respective converter may be controlled respectively switched such that the output terminal OUT1 of the converter 1 may provide an output voltage Vout variable between a first voltage level, a second voltage level and a third voltage level. The first voltage level may correspond to the voltage level applied to the first input terminal IN1 of the converter 1 and the second voltage level may correspond to the voltage level applied to the second input terminal IN2 of the converter 1. The third voltage level may correspond to the voltage level at the node between the two capacitors Ca, Cb electrically connected in series between the first input terminal IN1 and the second input terminal IN2.

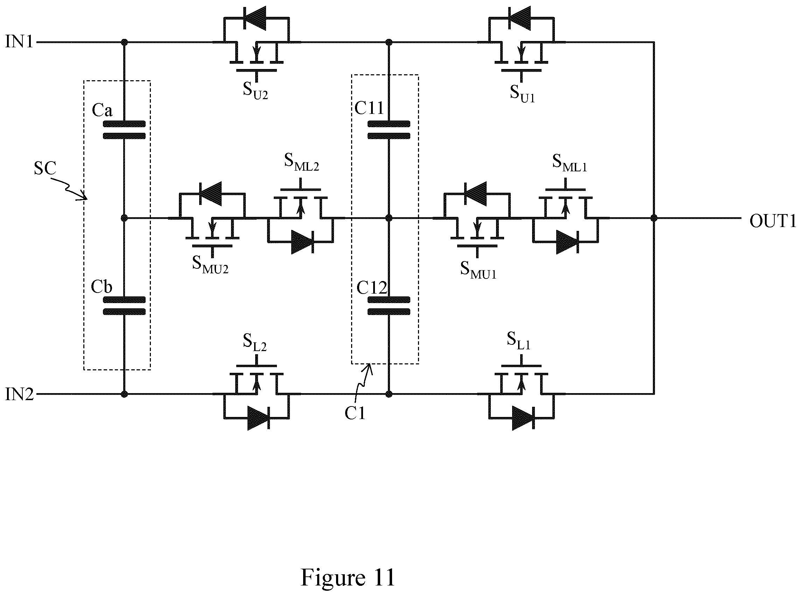

**Figures 11****,** **12** **and** **13** each show an example of a structure of a converter according to an embodiment of the invention. The above description with respect to Figure 10 is correspondingly valid for describing the converters of Figures 11, 12 and 13. The first series connection SC_{U} and second series connection SC_{L} of switches of the converter 1 of Figure 11 each comprise two switches S_{U2}, S_{U1} respectively S_{L2}, S_{L1}. The converter 1 of Figure 11 comprises one capacitor unit C1 corresponding to two capacitors C11 and C12 connected in series, and two bidirectional switches S_{MU2}, S_{ML2} and S_{MU1}, S_{ML1}. Thus, the converter 1 of Figure 11 may be referred to as five-level (5-level) nested T-type converter.

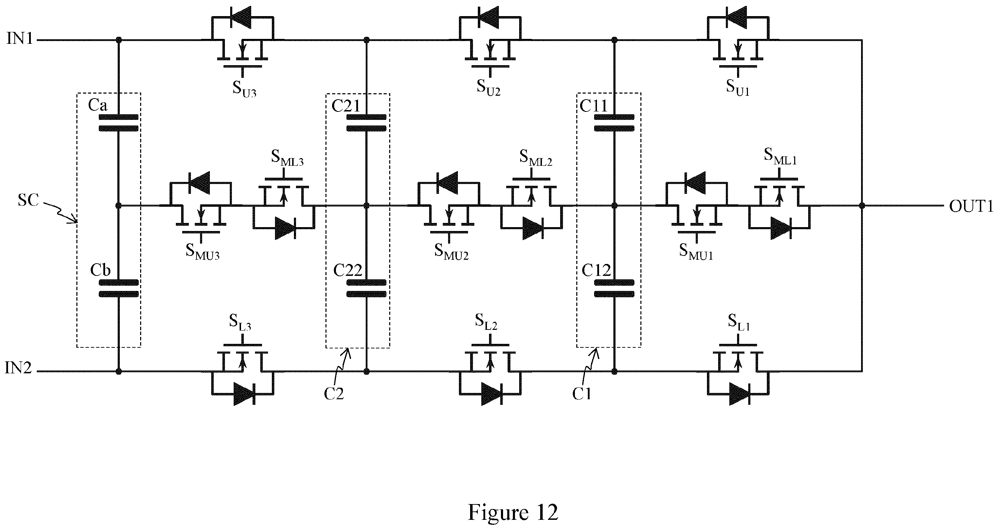

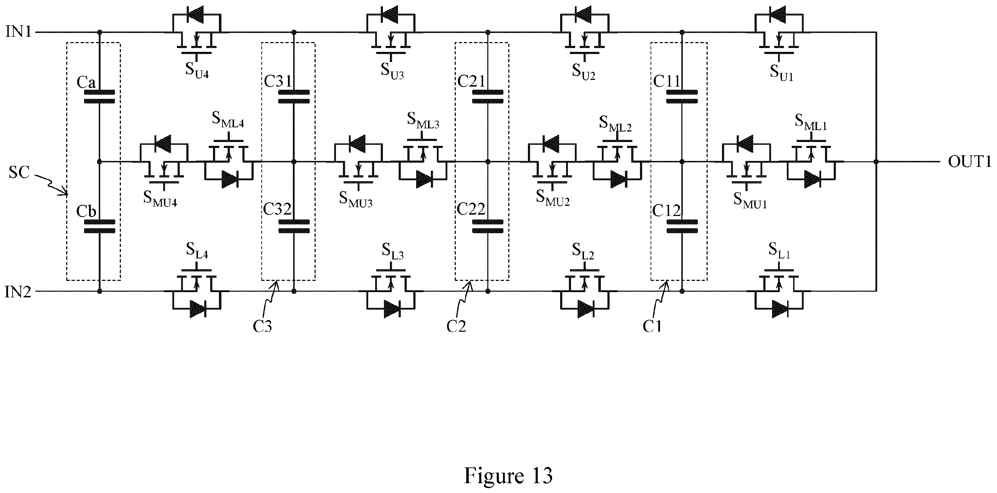

The nested T-type converter of Figure 12 corresponds to the converter of Figure 1 with regard to the number of switches of the two series connections SC_{U} and SC_{L} and the number of capacitor units. The two capacitor units C1 and C2 each correspond to two capacitors C11, C12 respectively C21. C22 connected in series. The converter 1 of Figure 12 comprises three bidirectional switches S_{MU3}, S_{ML3}; S_{MU2}, S_{ML2}; S_{MU1}, S_{ML1}. The converter 1 of Figure 12 may be referred to as seven-level (7-level) nested T-type converter. The nested T-type converter of Figure 13 corresponds to the converter of Figure 5a with regard to the number of switches of the two series connections SC_{U} and SC_{L} and the number of capacitor units. The three capacitor units C1, C2 and C3 each correspond to two capacitors C11, C12 respectively C21, C22 respectively C31, C32 connected in series. The converter 1 of Figure 13 comprises four bidirectional switches S_{MU4}, S_{ML4}; S_{MU3}, S_{ML3}; S_{MU2}, S_{ML2}; S_{MU1}, S_{ML1}. The converter 1 of Figure 12 may be referred to as nine-level (9-level) nested T-type converter.

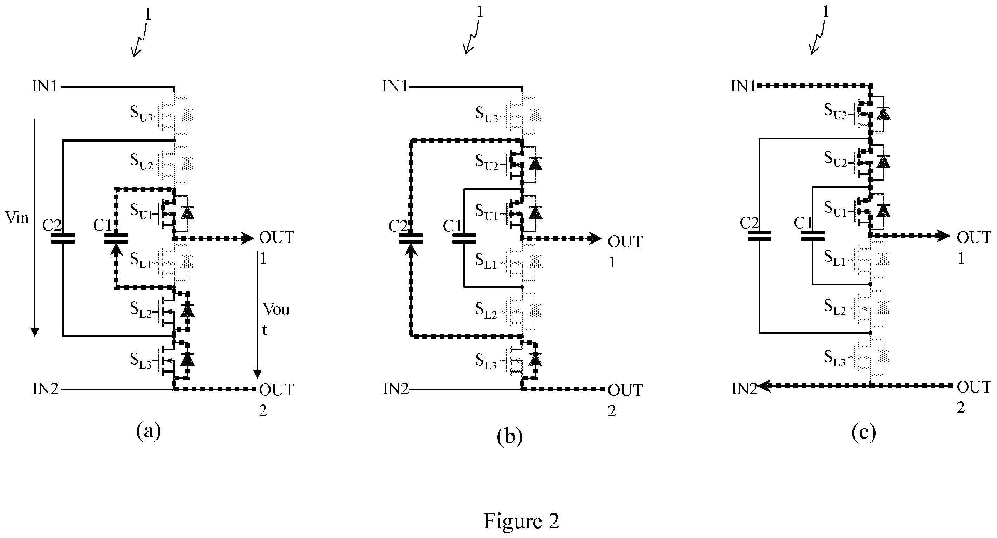

In the following, an operation of the converter of Figure 1 according to examples of the method of the present disclosure are described with respect to the Figures 2, 3, 6, 7 and 8. This description is also valid for converters with the converter structure shown in Figure 1 but a different number of switches and capacitor units compared to the number of switches and capacitor units shown in Figure 1 as well as for converters with a nested T-type converter structure. That is, the following description is correspondingly valid for the converters of Figures 4, 5, 10, 11, 12 and 13. In other words, the method of the present disclosure may be used for operating converters comprising a converter structure exemplarily shown in Figures 1, 4 and 5 as well as for operating nested T-type converters exemplarily shown in Figures 10, 11, 12 and 13 irrespective of the number of switches of the two series connections of switches SC_{U}, SC_{L} and number of capacitor units of the respective converter.

For the following description, it is assumed that a first voltage level V_{IN1} is applied to the first input terminal IN1 and a second voltage level V_{IN2} is applied to the second input terminal IN2, wherein the first voltage level V_{IN1} is greater than the second voltage level V_{IN2} (V_{IN1}>V_{IN2}). Thus, the DC voltage Vin applied to the input of the converter, in particular between the two input terminals IN1 and IN2, may correspond to the difference between these two voltage levels (Vin = V_{IN1} - V_{IN2}). Further, it is assumed that the second voltage level V_{IN2} corresponds to ground (V_{IN2} = GND), in particular to zero Volts (V_{IN2} = 0 V). The following is correspondingly valid in case that the second voltage level V_{IN2} corresponds to a voltage level different than ground GND or zero Volts. According to an embodiment the first voltage level V_{IN1} may equal to a positive DC voltage level and the second voltage level V_{IN2} may equal to a negative DC voltage level. The following description is correspondingly valid in case an AC voltage is applied to the input, in particular between the two input terminals IN1 and IN2, of the converter 1.

In a normal operation of the converter 1 of Figure 1 the DC voltage Vin may be equally distributed across switches of either one of the two series connections SC_{U} and SC_{L} of the converter. For example, the steady state (second steady state) of the converter 1 at which the output voltage Vout corresponds to the second voltage level V_{IN2} may be achieved by controlling the switches of the converter 1 such that the switches S_{L1}, S_{L2} and S_{L3} of the second series connection SC_{L} are in the conducting state and the switches S_{U1}, S_{U2} and S_{U3} of the first series connection SC_{U} are in the non-conducting state. The terms "being on", "being in the on-state" and "being in the conducting state" may be used as synonyms. The terms "being off", "being in the off-state" and "being in the non-conducting state" may be used as synonyms. In this case of steady state (second steady state), in a normal operation, the DC voltage Vin is equally distributed across the non-conducting switches S_{U1}, S_{U2} and S_{U3} of the first series connection SC_{U}. That is, the voltage V_{SU1} across the switch S_{U1}, the voltage V_{SU2} across the switch S_{U2} and the voltage V_{SU3} across the switch S_{U3} equal to each other in the aforementioned steady state.

For switching between the first steady state of the converter, at which the output voltage Vout equals to the first voltage level V_{IN1}, and the second steady state of the converter, at which the output voltage Vout equals to the second voltage level V_{IN2}, the converter 1 of Figure 1 may be operated according to a two-level (2-level) converter with short time intervals forming quasi multilevel stages. These short time intervals may also be referred to as transition phases. The key reason to use this kind of operation method switching between the two steady states of the converter via short transition phases is to be able to use small voltage class devices (switches) in series connection to obtain higher voltage levels. Due to the small steps and slower voltage slew rates the requirements for the isolation design and electromagnetic interference suppression are much lower and the volume and weight of the capacitor units are more compact. Figure 2 shows the switching states of the converter during two transition phases and the first steady state of the converter.

**Figure** 2 shows three different switching states of the converter of Figure 1, when operating the converter of Figure 1 according to an example of the method according to an embodiment of the invention. In Figure 2 the current flow through the converter is shown as a bold dotted line. As shown in Figure 2, the converter 1 of Figure 1 may optionally comprise a further output terminal OUT2 that is connected to the second input terminal IN2 of the converter 1

In particular, Figure 2a and 2b show the state of the converter during the two transition phases when switching the converter between the second steady state and the first steady state, wherein Figure 2c shows the first steady state. As a starting state, the converter 1 may be in the second steady state of the converter 1 (not shown in Figure 2), in which the switches S_{L1}, S_{L2} and S_{L3} of the second series connection SC_{L} are in the conducting state and the switches S_{U1}, S_{U2} and S_{U3} of the first series connection SC_{U} are in the non-conducting state. For switching the converter 1 to the first steady state, at first the switch S_{L1} of the second series connection SC_{L} is switched to the non-conducting state and the switch S_{U1} of the first series connection SC_{U} is switched to the conducting-state. The current flows from the capacitor unit C1 to the output terminal OUT1 and the output voltage Vout equals to the voltage V_{C1} of the capacitor C1. The switching state of the converter during this short transition phase is shown in Figure 2a. This transition phase may last approximately 1 microsecond. Thus, after a very short time interval (e.g. approximately 1 microsecond) the switch S_{L2} of the second series connection SC_{L} is switched to the non-conducting state and the switch S_{U2} of the first series connection SC_{U} is switched to the conducting-state. As a result the current flow from the capacitor C1 stops, a current starts flowing from capacitor C2 to the output terminal OUT1 and the output voltage Vout equals to the voltage V_{C2} of the capacitor C2. The switching state of the converter during this short transition phase is shown in Figure 2b. This transition phase may also last approximately 1 microsecond. Thus, after an equal amount of very short time (e.g. approximately 1 microsecond) the switch S_{L3} of the second series connection SC_{L} is switched to the non-conducting state and the switch S_{U3} of the first series connection SC_{U} is switched to the conducting-state. As a result, there is now current flow from the capacitors C1 and C2. Namely, a current flows from the first input terminal IN1 via the conducting switches S_{U3}, S_{U2} and S_{U1} of the first series connection SC_{L} to the output terminal OUT1. Thus, the output voltage Vout equals to the first voltage level V_{IN1} applied to the first input terminal IN1. This state corresponds to the first steady state and is shown in Figure 2c. For switching the converter from the first steady state to the second steady state the above description may be correspondingly valid, wherein now the switches that had been switched to the non-conducting state may be switched to the conducting state and vice versa. The sequence starting with the state of Figure 2c, may be followed by the transition phase shown in Figure 2b, followed by the transition phase shown in Figure 2a and finally followed by the second steady state of the converter not shown in Figure 2.

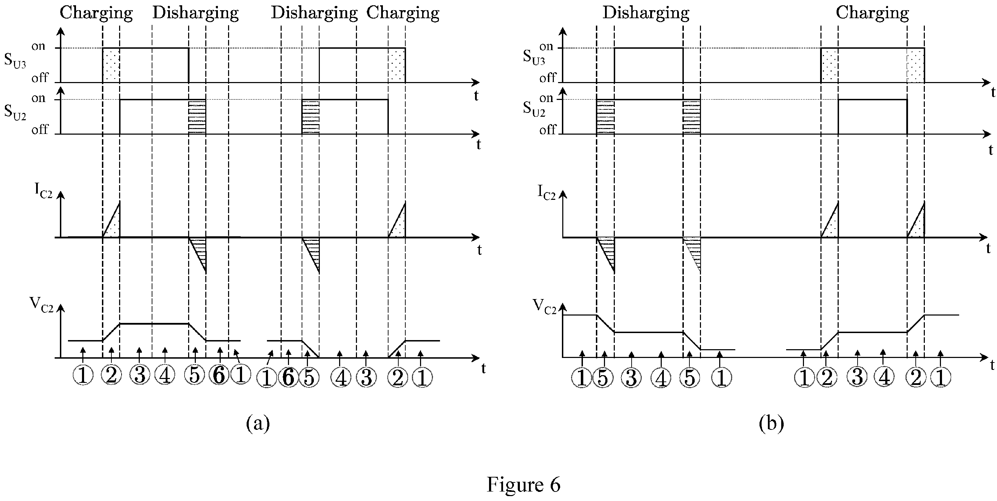

The delay interval between switching the switches of a series connection SC_{U} or SC_{L} to the conducting-state or the non-conducting state (that is switching at least two switches of a series connection SC_{U} or SC_{L} not at the same time but after each other) is done to establish the intermediate voltage levels V_{C1} and V_{C2} with no overloading of the device voltage rate. The intermediate voltage levels V_{C1} and V_{C2} are created by the capacitor units C1, C2 of the converter 1, which are directly interconnected with the switches, as shown in Figure 1. For maintaining the required voltage levels across the capacitor units the switches of the converter may be switched accordingly as exemplarily described with respect to Figure 6. Namely, a capacitor unit may be charged to increase the voltage of the capacitor unit by correspondingly switching the switches of the converter. Accordingly, a capacitor unit may be discharged to decrease the voltage of the capacitor unit by correspondingly switching the switches of the converter.

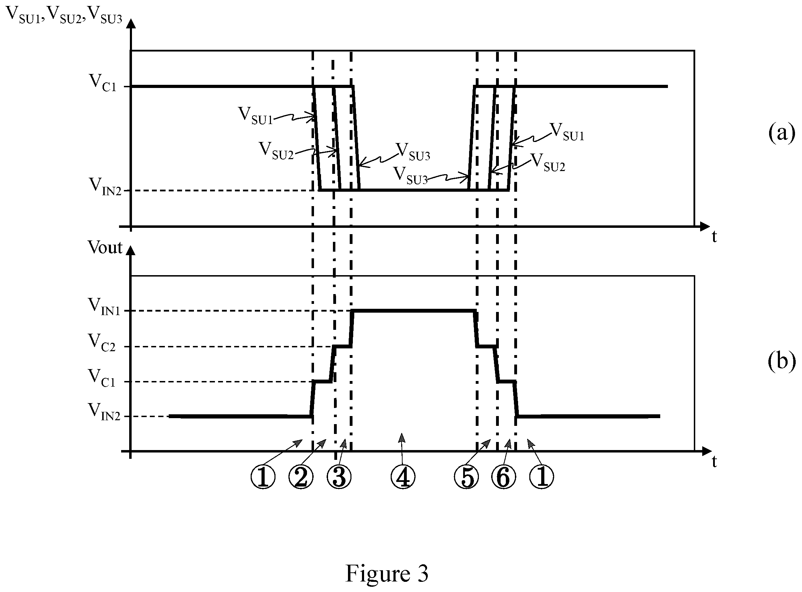

**Figure** 3 shows voltage curves over time present in the converter of Figure 1, when operating the converter of Figure 1 according to an example of the method according to an embodiment of the invention. In particular, when switching the converter of Figure 1 from the second steady state to the first steady state and again back to the second steady state, Figure 3a shows the voltage V_{SU1} across the switch S_{U1}, the voltage V_{SU2} across the switch S_{U2} and the voltage V_{SU3} across the switch S_{U3} over time and Figure 3b shows the output voltage Vout of the converter. The region 1 of Figure 3 correspond to the second steady state of the converter. The region 4 of Figure 3 corresponds to the first steady state of the converter, which is shown in Figure 2c. The regions 2 and 3 of Figure 3 correspond to very short transition phases respectively transition states (e.g. of approximately 1 microsecond), when switching from the second steady state to the first steady state and the regions 5 and 6 of Figure 3 correspond to very short transition phases respectively transition states (e.g. of approximately 1 microsecond), when switching from the first steady state to the second steady state. The regions 2 and 6 of Figure 3 correspond to the state of the converter shown in Figure 2a and the regions 3 and 5 of Figure 3 correspond to the state of the converter shown in Figure 2b. As shown in Figure 3, the voltage Vin applied to the input of the converter is equally distributed among the switches S_{U1}, S_{U2} and S_{U3} and is not higher than the voltage V_{C1} of the capacitor unit C1.

The power losses of each switch of the converter consist of conduction losses and switching losses. The conduction losses depend on the switch current and on-resistance which is internal characteristic of the switch. The switching losses are dependent on the switch current, the voltage across the switch, the on-time/off-time and the switching frequency: ${P}_{sw} = {P}_{swOn} + {P}_{swOff} = {V * I * t}_{on} {* f}_{sw} + {V * I * t}_{off} {* f}_{sw}$ (1)

In the above equation P_{sw} denotes the switching losses of a switch, P_{swOn} denotes the losses when switching the switch to the conducting state, P_{swOff} denotes the losses when switching the switch to the non-conducting state, V denotes the voltage across the switch, I denotes the switch current, tₒₙ denotes the on-time (time needed for switching the switch to the conducting-state), t_{off} denotes the off-time (time needed for switching the switch to the non-conducting-state) and f_{sw} denotes the switching frequency.

Real switches are not ideal and their characteristics such as on-resistance, gate threshold voltage, turn-on/turn-off times and thermal impedance are different. Furthermore, the thermal interface of a switch has microscopic imperfections which can trap air particles between the case and the heatsink. This degrades the thermal impedance between the switch and external heat sink. Due to these reasons, the stress on switches induced as power losses is not distributed equally among switches that are electrically connected in series. Therefore, after some time of constant operation, the health state of some switches may be considerably lower than the health state of the other switches. The failure of a single device may cause failure of the whole converter.

Therefore, the present disclosure proposes to actively change the voltage distribution of the voltage Vin received by the input terminals IN1 and IN2 among the switches S_{U1}, S_{U2}, S_{U3} of the first series connection SC_{U} respectively among the switches S_{L1}, S_{L2}, S_{L3} of the second series connection SC_{L}, such that lower voltage is applied to one or more switches with lower/worse health states and more voltage is applied to the other switches with a higher/better health state. In other words, it is proposed to share the stress of the device of lower/worse health state with the devices with higher/better health state.

For equally distributing the voltage Vin receivable by the two input terminals IN1 and IN2, the switches of the converter are controlled such that each of the two capacitor units C1, C2 is charged to a respective third voltage level. The third voltage level of a capacitor unit C_{K} may be defined as (K*Vin)/(N_{C} + 1), where Vin is the voltage received by the two input terminals IN1 and IN2, N_{C} is the number of capacitor units in the converter and K is the index of the capacitor unit (wherein the index is greater or equal to one, K ≥ 1). The capacitor unit connected closest to the output terminal has the lowest index K (K = 1). Thus, in the case of the converter of Figure 1, the third voltage level for the capacitor unit C1 may equal to Vin/3 and the third voltage level for the capacitor unit C2 may equal to 2Vin/3.

For a nested T-type converter, as exemplarily shown in Figures 10, 11, 12 and 13, the third voltage level of a capacitor unit C_{K} may be defined as (2*K*Vin)/(2*N_{c}), wherein Vin is the voltage received by the two input terminals IN1 and IN2 and K is the index of the capacitor unit (wherein the index is greater or equal to one, K ≥ 1). N_{C} is the number of capacitor units in the converter, wherein the series connection of the two capacitors Ca, Cb electrically connecting the first and second input terminal of the converter is counted as one capacitor unit. The capacitor unit connected closest to the output terminal has the lowest index K (K = 1) and the series connection of the two capacitors Ca, Cb electrically connecting the first and second input terminal of the converter to each other is treated as the capacitor unit with the highest index K. Thus, with regard to the nested T-type converter of Figure 11, the third voltage level for the capacitor unit C1 may equal to 2Vin/4, which is equally distributed among the capacitors C11 and C12 of the capacitor unit C1 (C11 = C12 = Vin/4). That is, the third voltage level for each capacitor of a capacitor unit corresponds to half of the third voltage level for the capacitor unit. The third voltage level for the series connection of the two capacitors Ca and Cb, which is treated as the capacitor unit C2, may equal to Vin, which is equally distributed among the capacitors Ca and Cb (Ca = Cb = Vin/2). With regard to Figure 12, the third voltage level for the capacitor units may be as follows: C1 = 2Vin/6, C11 = C12 = Vin/6; C2 = 4Vin/6, C21 = C22 = 2Vin/6; Ca = Cb = 3Vin/6. With regard to Figure 13, the third voltage level for the capacitor units may be as follows: C1 = 2Vin/8, C11 = C12 = Vin/8; C2 = 4Vin/8, C21 = C22 = 2Vin/8; C3 = 6Vin/8, C31 = C32 = 3Vin/8; Ca = Cb = 4Vin/8.

With regard to Figure 1, if the capacitor unit C2 gets charged to a higher/greater voltage level than the third voltage level for the capacitor unit C2, the voltage across the switches S_{U3} and S_{L3} will decrease, whereas the voltages across the switches S_{U2} and S_{L2} will increase, and vice versa. That is, the stress applied to the switches S_{U3} and S_{L3} may be reduced and redistributed to the remaining switches S_{U2}, S_{U1}, S_{L1} and S_{L2}. If the capacitor unit C2 gets charged or discharged to a lower/smaller voltage level than the third voltage level for the capacitor unit C2, the voltage across the switches S_{U3} and S_{L3} will increase, whereas the voltages across the switches S_{U2} and S_{L2} will decrease. The terms "decrease" and "reduce" may be used as synonyms. The terms "increase" and "raise" may be used as synonyms.

In other words, the more the capacitor unit C2 gets charged above the respective/corresponding third voltage level, the more the portion of the voltage Vin distributed to the switches S_{U3} and S_{L3} is reduced and the more the portion of the voltage Vin distributed to the switches S_{U2} and S_{L2} is increased. Accordingly, the less the capacitor unit C2 gets charged below the respective/corresponding third voltage level or the more the capacitor unit C2 gets discharged below the respective/corresponding third voltage level, the more the portion of the voltage Vin distributed to the switches S_{U3} and S_{L3} is increased and the more the portion of the voltage Vin distributed to the switches S_{U2} and S_{L2} is reduced.

Then, the voltage of the capacitor unit C1 will determine the voltage distribution of the voltage of the capacitor unit C2 and, thus, the stress distribution between switches S_{U2}, S_{L2} and switches S_{U1}, S_{L1}. If the capacitor unit C1 gets charged to the respective third voltage level for the capacitor unit C1, the voltage of the capacitor unit C2 and, thus, the remaining stress respectively power losses will be distributed equally between the remaining switch pairs S_{U2}, S_{L2} and S_{U1}, S_{L1}. Otherwise, if the capacitor unit C1 gets charged to a higher/greater voltage level than the third voltage level for the capacitor unit C1, the voltage across the switches S_{U2} and S_{L2} will decrease, whereas the voltages across the switches S_{U1} and S_{L1} will increase, and vice versa. That is, the power losses of the switches S_{U2} and S_{L2} will be lower than the power losses of the switches S_{U1} and S_{L1}. The above description is an example of how redistributing the voltages across the switches of the converter by charging and/or discharging the capacitor units C1 and C2 of the converter may redistribute the stress from weak switches to healthy switches. This will increase the lifetime of the whole converter.

The above description of the method of the first aspect is valid for describing a method of operating the converter of Figure 1 to achieve a higher lifetime of the converter. With regard thereto, the switches S_{U1} and S_{L1} of the converter of Figure 1 each correspond to a switch that is electrically connected to the output terminal OUT1 (may be referred to as output switch or third switch). The capacitor unit C1 corresponds to the capacitor unit that is electrically connected to the first node of the first series connection and second node of the second series connection that are closest, in terms of the number of nodes, to the output terminal. The switches S_{U3}, S_{U2}, S_{L2} and S_{L3} of the converter of Figure 1 each correspond to a switch that is electrically connected via one or more switches to the output terminal OUT1. For the switches S_{U3} and S_{L3}, the capacitor unit C2 corresponds to a first capacitor unit that is connected to a terminal of two terminals of the switch S_{U3} respectively S_{L3} that is closer, in terms of the number of nodes, to the output terminal OUT1. For the switches S_{U2} and S_{L2}, the capacitor unit C1 corresponds to a first capacitor unit that is connected to a terminal of two terminals of the switch S_{U2} respectively S_{L2} that is closer, in terms of the number of nodes, to the output terminal OUT1. Moreover, for the switches S_{U2} and S_{L2}, the capacitor unit C2 corresponds to a second capacitor unit that is connected to the other terminal of the two terminals of the switch S_{U2} respectively S_{L2}.

**Figure** 6 shows voltage curves over time of voltages present in the converter of Figure 1, when operating the converter of Figure 1 according to an example of the method according to an embodiment of the invention. In particular, Figure 6 exemplarily shows switching sequences of the switches S_{U2} and S_{U3} of the first series connection SC_{U} of the converter 1 of Figure 1 for charging/discharging the capacitor unit C2 to change the voltage of the capacitor unit C2.

In Figure 6, the top graphs show the switching of the switch S_{U3} between the conducting-state "on" and the non-conducting state "off" over time t. The second-to-top graphs show the switching of the switch S_{U2} between the conducting-state "on" and the non-conducting state "off" over time t. The second-to-bottom graphs show the current I_{C2} through the capacitor unit C2 over time t and the bottom graphs show the voltage V_{C2} of the capacitor unit C2 over time t.

The left graphs of Figure 6a show a mixed sequence for a balanced operation, that is the capacitor unit C2 gets charged and discharged allowing the voltage of the capacitor unit C2 to stay constant when repeating this sequence, for example at the respective third voltage level. The right graphs of Figure 6a show a further mixed sequence for a balanced operation, that is the capacitor unit C2 gets discharged and charged allowing the voltage of the capacitor unit C2 to stay constant when repeating this sequence, for example at the respective third voltage level.

The right graphs of Figure 6b show a charging sequence, that is the capacitor unit C2 gets charged allowing to increase the voltage of the capacitor unit C2, for example above the respective third voltage level. In other words, the right graphs of Figure 6b show a charging sequence for charging the capacitor unit C2 above for example the respective third voltage level. The left graphs of Figure 6b show a discharging sequence, that is the capacitor unit C2 gets discharged allowing to decrease the voltage of the capacitor unit C2, for example below the respective third voltage level. In other words, the left graphs of Figure 6b show a discharging sequence for discharging the capacitor unit C2 below for example the respective third voltage level. The description of Figure 6 with respect to charging respectively discharging the capacitor unit C2 is correspondingly valid for charging and discharging another capacitor unit of the converter (capacitor unit C1).

The voltage levels of the capacitor units C1 and C2 of the converter of Figure 1 may be changed during the transition phases between the first steady state and the second steady state of the converter. That is, the voltage levels of the capacitor units C1 and C2 may be changed according to the delay sequence between the switches of the converter. Namely, for switching the converter between the first steady state and the second steady state the switches S_{U3}, S_{U2} and S_{U1} of the first series connection SC_{U} may be switched after each other with very short switching delays between the switching. This is also true for the switches S_{L3}, S_{L2} and S_{L1} of the second series connection SC_{L}. In the following switching of the switches S_{U3}, S_{U2} and S_{U1} of the first series connection SC_{U} is described with respect to Figure 6. The switches S_{L3}, S_{L2} and S_{L1} of the second series connection SC_{L} are inversely switched. That is, the switch S_{L3} and the switch S_{U3} are inversely switched. For example, when the switch S_{U3} is switched to the conducting state then the switch S_{L3} is switched to the non-conducting state and vice versa. The same applies to the switch pair S_{U2} and S_{L2} and the switch pair S_{U1} and S_{L1}. The passages "switching a switch to the conducting state/non-conducting state" and "turning a switch on/off" may be used as synonyms.

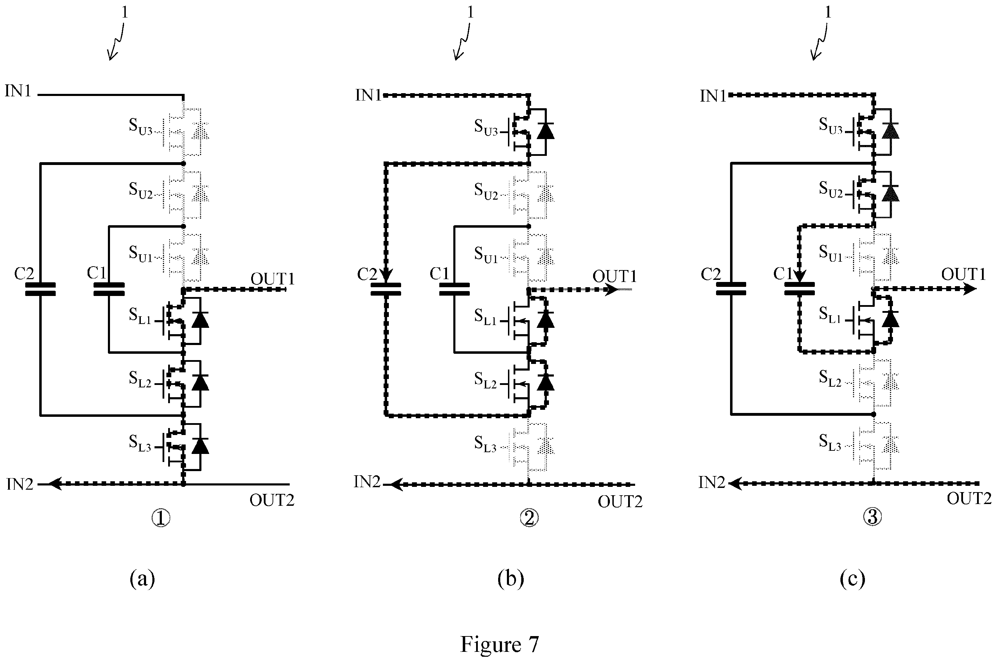

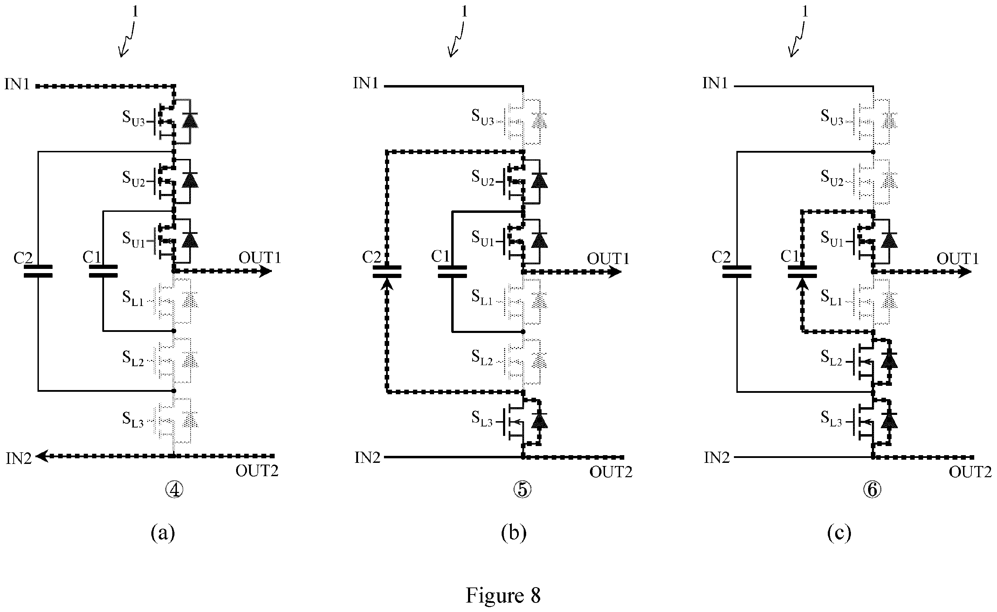

With regard to the switching sequence on the left side of Figure 6a, the region 1 corresponds to the state of the converter in which the switches S_{U3}, S_{U2} and S_{U1} of the first series connection SC_{U} are in the non-conducting state and, thus, all switches S_{L3}, S_{L2} and S_{L1} of the second series connection SC_{L} are in the conducting state. Therefore, current flows from the output OUT1 to the second input terminal IN2, as shown in Figure 7a. This corresponds to the second steady state of the converter. After that, as shown in region 2 of the left side of Figure 6a, the switch S_{U3} is switched to the conducting state while the switches S_{U2} and S_{U1} are in the non-conducting state. As a result, the capacitor unit C2 gets charged with the current I_{C2} as is shown in region 2 of the left side of Figure 6a and Figure 7b. The amount of voltage added to/subtracted from a capacitor unit is proportional to the device current and operation time and inversely proportional to its capacitance as Δv = iΔt/C. The operation time may be very short, and the capacitance may be very small, therefore the voltage change may be limited and the switches (switching devices) are operated in save voltage range. Next, as shown in region 3 of the left side of Figure 6a, the switch S_{U2} is switched to the conducting state, while the switch S_{U3} is in the conducting state and the switch S_{U1} is in the non-conducting state. Thus, the current does not flow through the capacitor unit C2, but flows through the capacitor unit C1 so that the capacitor unit C1 gets charged as is shown in Figure 7c corresponding to region 3 of Figure 6. Next, in the region 4, the switch S_{U1} is switched to the conducting state so that all the switches S_{U3}, S_{U2} and S_{U1} are in the conducting state. Therefore, the currents and voltages of the capacitor units C1, C2 do not change anymore. This corresponds to the first steady state as shown in Figure 8a corresponding to region 4 of Figure 6.

The switching sequence shown on the right side of Figure 6a is opposite to the switching sequence shown on the left side of Figure 6a. Namely, according to the sequence of regions 1, 2, 3, 4, 5, 6, 1 of the left side of Figure 6a the capacitor units C1 and C2 get charged when switching the switches S_{U3}, S_{U2} and S_{U1} of the first series connection SCU from the non-conducting state to the conducting state by the sequence of regions 1, 2, 3, 4 (i.e. when switching the converter from the second steady state to the first steady state). In addition, the capacitor units C1 and C2 get discharged when switching the switches S_{U3}, S_{U2} and S_{U1} of the first series connection SC_{U} from the conducting state to the non-conducting state by the sequence of regions 4, 5, 6, 1 (i.e. when switching the converter from the first steady state to the second steady state).

In contrast thereto, according to the sequence of regions 1, 6, 5, 4, 3, 2, 1 of the right side of Figure 6a the capacitor units C1 and C2 get discharged when switching the switches S_{U3}, S_{U2} and S_{U1} of the first series connection SC_{U} from the non-conducting state to the conducting state by the sequence of regions 1, 6, 5, 4 (i.e. when switching the converter from the second steady state to the first steady state). In addition, the capacitor units C1 and C2 get charged when switching the switches S_{U3}, S_{U2} and S_{U1} of the first series connection SC_{U} from the conducting state to the non-conducting state by the sequence of regions 4, 3, 2, 1 (i.e. when switching the converter from the first steady state to the second steady state).

The discharging sequence is opposite to the charging sequence. As shown on the right side of the Figure 6a the region 1 denotes the second steady state of the converter as the starting state of the switching sequence. After that, in region 6 of the right side of Figure 6a, the switch S_{U1} is switched to the conducting state while the switches S_{U2} and S_{U1} are in the non-conducting state. As a result, the capacitor unit C1 gets discharged because the current flows out of it, as is shown in Figure 8c that corresponds to region 6 of Figure 6. Thus, the current flow through the capacitor unit C1 (charging the capacitor unit C1) of region 3 of Figure 6, shown in Figure 7c, is opposite to the current flow through the capacitor unit C1 (discharging the capacitor unit C1) of region 6 of Figure 6, shown in Figure 8c. Next, as shown in region 5 of the right side of Figure 6a, the switch S_{U2} is switched to the conducting state while the switch S_{U1} is kept in the conducting state and the switch S_{U3} is kept in the non-conducting state. As a result, the capacitor unit C2 gets discharged because the current I_{C2} flows out of it, as is shown in region 5 of Figure 6 and Figure 8b. Thus, the current flow I_{C2} through the capacitor unit C2 (charging the capacitor unit C2) of region 2 of Figure 6, shown in Figure 7b, is opposite to the current flow through the capacitor unit C2 (discharging the capacitor unit C2) of region 5 of Figure 6, shown in Figure 8b. The discharge rate of the capacitor units is the same as the charge rate of the capacitor units.

It is also possible to only charge the capacitor units C1, C2 during one cycle (e.g. switching the capacitor unit from the second steady state to the first steady state and back again to the second steady state) as shown with regard to capacitor unit C2 on the right side of Figure 6b, with the switching sequence of regions 1, 2, 3, 4, 2, 1. As shown on the right side of Figure 6b, the switch S_{U3} is switched to the conducting state before the switch S_{U2} and switched to the non-conducting state after the switch S_{U2}. It is also possible to only discharge the capacitor units C1, C2 during one cycle (e.g. switching the capacitor unit from the second steady state to the first steady state and back again to the second steady state) as shown with regard to capacitor unit C2 on the left side of Figure 6b, with the switching sequence of regions 1, 5, 3, 4, 5, 1. As shown on the left side of Figure 6b, the switch S_{U3} is switched to the conducting state after the switch S_{U2} and switched to the non-conducting state before the switch S_{U2}.

The different switching states of the converter of Figure 1 are shown on the basis of the switching states of the switches S_{U3}, S_{U2} and S_{U1} of the first series connection SC_{U} in the Table 1 below, wherein the different switching states of the converter are associated to the regions 1, 2, 3, 4, 5, and 6 shown in Figures 6, 7 and 8. As indicated already above, in the different switching states of the converter the switches S_{L3}, S_{L2} and S_{L1} of the second series connection SC_{L} are in the opposite/inverse switching state with respect to the corresponding switch of the first series connection SC_{U}. In Table 1, a "0" indicates that a switch is in the non-conducting state and a "1" indicates that a switch is in the conducting state. Table 1 also indicates for the different switching states whether the capacitor units C1, C2 are charged ("Ch"), discharged ("Dis") or neither of both ("-"). In Table 1, the term "second steady state" is abbreviated by "SSS", the term "transition phase" (which also may be referred to as transition state) is abbreviated as "TP" and the term "first steady state" is abbreviated as "FSS".

**Table 1: Different states of the converter of Figure 1**

| | | | | | | |
|---|---|---|---|---|---|---|
| regions shown in Figures 6, 7 and 8 | 1 | 2 | 3 | 4 | 5 | 6 |
| state of converter | SSS | TP | TP | FSS | TP | TP |
| S_{U3} | 0 | 1 | 1 | 1 | 0 | 0 |
| S_{U2} | 0 | 0 | 1 | 1 | 1 | 0 |
| S_{U1} | 0 | 0 | 0 | 1 | 1 | 1 |
| C1 | - | - | Ch | - | - | Dis |
| C2 | - | Ch | - | - | Dis | - |

**Figures 7** **and** **8** each show three different switching states of the converter of Figure 1, when operating the converter of Figure 1 according to an example of the method according to an embodiment of the invention. In Figures 7 and 8 the current flow through the converter is shown as a bold dotted line.

The switching state of Figure 7a corresponds to the second steady state of the converter and, thus, to the region 1 of Figure 6. In this state, the capacitor units C1 and C2 get neither charged nor discharged. The switching state of Figure 7b corresponds to a transition phase of the converter, in which the capacitor unit C2 gets charged. This state corresponds to region 2 of Figure 6. The switching state of Figure 7c corresponds to a transition phase of the converter, in which the capacitor unit C1 gets charged. This state corresponds to region 3 of Figure 6.

The switching state of Figure 8a corresponds the first steady state of the converter and, thus, to the region 4 of Figure 6. In this state, the capacitor units C1 and C2 get neither charged nor discharged. The switching state of Figure 8b corresponds to a transition phase of the converter, in which the capacitor unit C2 gets discharged. This state corresponds to region 5 of Figure 6. The switching state of Figure 8c corresponds to a transition phase of the converter, in which the capacitor unit C1 gets discharged. This state corresponds to region 6 of Figure 6.

For determining the power loss of the switches S_{U3}, S_{U2}, S_{U1}, S_{L1}, S_{L2} and S_{L3} of the converter and, thus, the health state of the switches, the temperature of each switch as an indicator of the power loss of the respective switch may be measured. The higher the power loss of a switch, the higher the stress on the switch and, thus, the worse the health state of the switch.

Therefore, the switch with the highest temperature and, thus, highest power loss among the switches S_{U3}, S_{U2}, S_{U1}, S_{L1}, S_{L2} and S_{L3} is the switch with the worst health state among the switches S_{U3}, S_{U2}, S_{U1}, S_{L1}, S_{L2} and S_{L3}. As a result, the switches S_{U3}, S_{U2}, S_{U1}, S_{L1}, S_{L2} and S_{L3} may be controlled such that a portion of the voltage Vin (received by the input terminals IN1, IN2) that is distributed to the switch with the highest power loss is reduced.

In other words, the switches S_{U3}, S_{U2}, S_{U1}, S_{L1}, S_{L2} and S_{L3} may be controlled such that the capacitor units C1, C2 are charged and/or discharged so that the voltage distributed to the switch with the highest power loss is reduced and the amount of voltage, by which the voltage distributed to the switch with the highest power loss is reduced, is redistributed to the other switches of the converter. As a result, the stress on the switch with the highest power loss may be reduced. The stress of the other switches may not be significantly increased as a result of the redistribution because the redistributed amount of voltage may be equally redistributed among the other switches so that the voltage redistributed to each of the other switches is not so much.

According to an embodiment, the combined power loss of each switch pair of the converter, that is the combined power loss of the two switches of each switch pair, may be determined.

As outlined already above, the switches S_{U1} and S_{L1}, the switches S_{U2} and S_{L2} and the switches S_{U3} and S_{L3} each form a switch pair. The switch pair with the highest combined power loss among the combined power losses of the switched pairs of the converter may be determined. By determining the switch pair with the highest combined power loss the switch pair with the worst health state among the switch pairs may be determined The switches S_{U3}, S_{U2}, S_{U1,} S_{L1}, S_{L2} and S_{L3} may then be controlled such that a portion of the voltage Vin (received by the input terminals IN1, IN2) that is distributed to the two switches of the switch pair with the highest combined power loss is reduced.

For determining the combined power loss of a switch pair of the converter the sum of the temperature of the first switch of the switch pair and the temperature of the second switch of the switch pair may be determined, in particular computed. Namely, the sum of these two temperatures may be an indicator for the combined power loss of the switch pair.

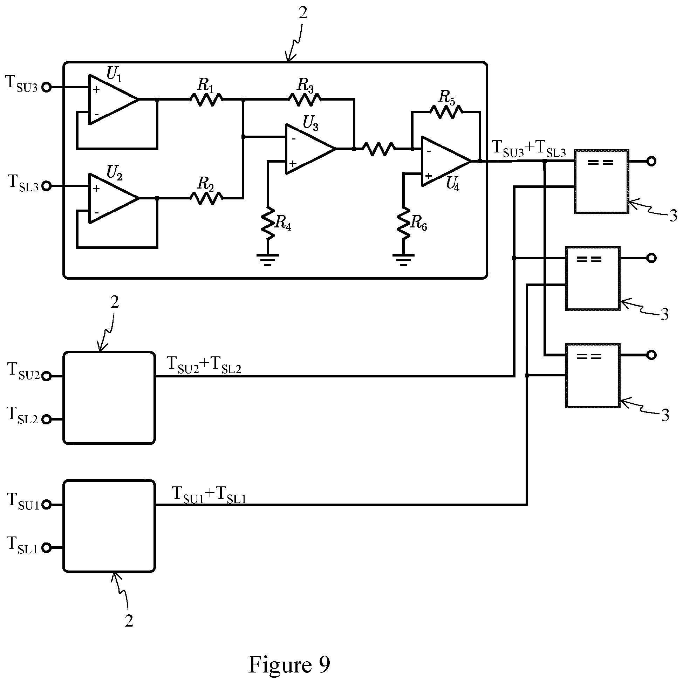

**Figure** 9 shows an example of a part, of a control unit according to an embodiment of the invention, for determining power loss of the switches of the converter of Figure 1.

The part of the control unit shown in Figure 9 is configured to determine the combined power loss of the switch pairs of the converter by determining the temperatures of the switch pairs and to determine the switch pair with the highest power loss by comparing the temperatures of the switch pairs with each other. For this the temperatures T_{SU3}, T_{SU2}, T_{SU1}, T_{SL1}, T_{SL2}, T_{SL3} of the switches S_{U3}, S_{U2}, S_{U1,} S_{L1}, S_{L2} and S_{L3} are measured using known methods, that is the temperature of each switch is measured using known methods. Then the temperature of the two switches of each switch pair are added to compute an indicator for the combined power loss of the respective switch pair. That is, as shown in Figure 9, the temperatures T_{SU3} and T_{SL3} are added (T_{SU3} + T_{SL3}) so that the sum of these two temperatures is an indicator for the combined power loss of the switch pair comprising the switches S_{U3} and S_{L3}. The temperatures T_{SU2} and T_{SL2} are added (T_{SU2} + T_{SL2}) so that the sum of these two temperatures is an indicator for the combined power loss of the switch pair comprising the switches S_{U2} and S_{L2}. The temperatures T_{SU1} and T_{SL1} are added (T_{SU1} + T_{SL1}) so that the sum of these two temperatures is an indicator for the combined power loss of the switch pair comprising the switches S_{U1} and S_{L1}. For this computation an example is shown in Figure 9 with respect to adding the temperatures T_{SU3} and T_{SL3}. This is only by way of example and, thus, the temperatures may additionally or alternatively be computed by different known methods.

As shown in Figure 9, after measuring the temperatures T_{SU3} and T_{SL3} of the switches S_{U3} and S_{L3}, the measurement results are amplified with an emitter follower circuit using operational amplifiers U₁ and U₂. The amplified signals are then applied to an inverting summation circuit comprising resistors R₁, R₂, R₃ and R₄ and operational amplifier U₃. The block for computing the addition of the temperatures T_{SU3} and T_{SL3} (T_{SU3} + T_{SL3}) may in addition comprise the operational amplifier U₄ and the resistors R₅ and R₆. Next the sums of the respective temperatures representing the respective combined power losses of the switch pairs are compared using comparing units 3. Thus, the part of the control unit shown in Figure 9 is configured to determined the switch pair with the highest combined power loss among the switch pairs on the basis of the measured temperatures of the switches.

According to an example scenario the temperatures of the switches S_{U3}, S_{U2}, S_{U1,} S_{L1}, S_{L2} and S_{L3} may be as follows:
T_{SU3} = 60°C, T_{SU2}= 30°C, T_{SU1}= 32°C, T_{SL1}= 35°C, T_{SL2}= 29°C and T_{SL3}= 30°C.

Thus, the combined temperatures are as follows: ${T}_{SU 3} + {T}_{SL 3} = 90 ° C > {T}_{SU 1} + {T}_{SL 1} = 67 ° C > {T}_{SU 2} + {T}_{SL 2} = 59 ° C$

That is, the switch pair comprising the switches S_{U3} and S_{L3} has the highest combined power loss among the switch pairs, because the sum of the temperatures of the two switches S_{U3} and S_{L3} is higher than the sum of the temperatures of the two switches of the other switch pairs. The switch pair comprising the switches S_{U2} and S_{L2} has the lowest combined power loss among the switch pairs, because the sum of the temperatures of the two switches S_{U2} and S_{L2} is lower than the sum of the temperatures of the two switches of the other switch pairs.

Therefore, in the above scenario, for increasing the lifetime of the converter the stress and, thus, voltage applied to the switches S_{U3} and S_{L3} may be reduced by a voltage amount. This voltage amount may then be equally redistributed to the other switches S_{U2}, S_{U1}, S_{L1}, S_{L2} of the converter. Alternatively, this voltage amount may then be redistributed, such that more of said voltage amount is distributed to the switches S_{U2} and S_{L2} than to the switches S_{U1} and S_{L1}, because the combined power loss of the switch pair comprising the switches S_{U1} and S_{L1} is higher than the combined power loss of the switch pair comprising the switches S_{U2} and S_{L2}.

For achieving this, the capacitor unit C2 may get charged above the respective third voltage level (2Vin/3), but below the voltage Vin received by the input terminals IN1 and IN2. As a result thereof, the portion of the voltage Vin distributed to the switches S_{U3} and S_{L3} is reduced. This reduces the power losses of the switches S_{U3} and S_{L3} and, thus, reduces the stress on the switches S_{U3} and S_{L3}. Charging the capacitor unit C2 above the respective third voltage level (2Vin/3) increases the rest portion of the voltage Vin distributed to the other switches S_{U2}, S_{U1}, S_{L1}, S_{L2}. This rest portion is increased by the same degree/extent as the portion of the voltage Vin distributed to the switches S_{U3} and S_{L3} is reduced. For redistributing power losses of the switches S_{U1} and S_{L1} to the switches S_{U2} and S_{L2}, the capacitor unit C1 may get charged or discharged to a voltage level that is lower/smaller than the respective third voltage level of the capacitor unit C1 (Vin/3), but higher than 0 V.

The present disclosure has been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation. Variations and modifications are possible within the scope of the appended claims.

## Claims

1. A method for operating a multilevel flying capacitor converter (1), wherein
- the converter (1) comprises:
- a first and second input terminal (IN1, IN2) for receiving a DC voltage (Vin),
- an output terminal (OUT1) for providing an output voltage (Vout) variable between a first voltage level (V_{IN1}) and a second voltage level (V_{IN2}),
- a first and second series connection (SC_{U}, SC_{L}) each comprising two or more switches (S_{U(N-1)}, S_{U1}; S_{L1}, S_{L(N-1)}) that are semiconductor switches, and
- one or more capacitor units (C1), wherein
- the first input terminal (IN1) is electrically connected via the first series connection (SC_{U}) of the two or more switches (S_{U(N-1)}, S_{U1}) to the output terminal (OUT1),
- the second input terminal (IN2) is electrically connected via the second series connection (SC_{L}) of the two or more switches (S_{L1,} S_{L(N-1)}) to the output terminal (OUT1),
- each of the one or more capacitor units (C1) electrically connects a first node between two switches of the first series connection (SC_{U}) and a second node between two switches of the second series connection (SC_{L}) with each other, wherein the number of nodes between the first node and the output terminal (OUT1) and the number of nodes between the second node and the output terminal (OUT1) are equal to each other, and
- the DC voltage (Vin) is equally distributable to the switches (S_{U(N-1)}, S_{U1}, S_{L1}, S_{L(N-1)}) of the first and second series connection (SC_{U}, SC_{L}) by controlling the switches (S_{U(N-1)}, S_{U1}, S_{L1}, S_{L(N-1)}) such that each of the one or more capacitor units (C1) is charged to a respective third voltage level; and
- the method comprises the following step:
- compensating different power losses of the switches (S_{U(N-1)}, S_{U1}, S_{L1,} S_{L(N-1)}) by controlling the switches (S_{U(N-1)}, S_{U1}, S_{L1,} S_{L(N-1)}) such that
- one or more of the one or more capacitor units (C1) are charged above the respective third voltage level, and/or
- one or more of the one or more capacitor units (C1) are charged below the respective third voltage level,
so that the DC voltage (Vin) is not equally distributed to the switches (S_{U(N-1)}, S_{U1}, S_{L1,} S_{L(N-1)}),
wherein the method further comprises the following steps
- determining a combined power loss of each switch pair comprising a first switch of the first series connection (SC_{U}) and a second switch of the second series connection (SC_{L}), wherein the number of switches between the first switch and the output terminal (OUT1) and the number of switches between the second switch and the output terminal (OUT1) are equal to each other;
- determining a switch pair with the highest combined power loss among the combined power losses of the switch pairs of the first and second series connection (SC_{U}, SC_{L}); and
- controlling the switches (S_{U(N-1)}, S_{U1}, S_{L1,} S_{L(N-1)}) such that a portion of the DC voltage (Vin) distributed to the first switch and second switch of the switch pair with the highest combined power loss is reduced.

2. The method according to claim 1, wherein the method comprises the following step:
- compensating different power losses of the switches (S_{U(N-1)}, S_{U1}, S_{L1,} S_{L(N-1)}) by controlling the switches (S_{U(N-1)}, S_{U1}; S_{L1,} S_{L(N-1)}) such that
- one or more of the one or more capacitor units (C1) get charged above the respective third voltage level, and/or
- one or more of the one or more capacitor units (C1) get charged or discharged below the respective third voltage level;
optionally during one or more transition phases between a first steady state of the converter (1), at which the output voltage (Vout) equals to the first voltage level (V_{IN1}), and a second steady state of the converter (1), at which the output voltage (Vout) equals to the second voltage level (V_{IN2}).

3. The method according to claim 1 or 2, wherein the method comprises the following step:
- determining the power loss of one or more of the switches (S_{U(N-1)}, S_{U1}, S_{L1,} S_{L(N-1)}), in particular of each of the switches, by measuring the temperature of the respective switch as an indicator of the power loss of the respective switch.

4. The method according to any one of the previous claims, wherein the method comprises the following steps:
- determining a switch with the highest power loss among the power losses of the switches (S_{U(N-1)}, S_{U1}, S_{L1,} S_{L(N-1)}); and
- controlling the switches (S_{U(N-1)}, S_{U1}, S_{L1,} S_{L(N-1)}) such that a portion of the DC voltage (Vin) distributed to the switch with the highest power loss is reduced.

5. The method according to claim 4, wherein the method comprises the following step:
- controlling the switches (S_{U(N-1)}, S_{U1}, S_{L1,} S_{L(N-1)}) such that the portion of the DC voltage (Vin) distributed to the switch with the highest power loss is reduced and the rest of the DC voltage (Vin) is equally distributed to the rest of the switches.

6. The method according to any one of the previous claims, wherein the method comprises the following step:
- controlling the switches (S_{U(N-1)}, S_{U1}, S_{L1,} S_{L(N-1)}) such that the portion of the DC voltage (Vin) distributed to the first switch and second switch of the switch pair with the highest combined power loss is reduced and the rest of the DC voltage (Vin) is equally distributed to the rest of the switches (S_{U(N-1)}, S_{U1}, S_{L1,} S_{L(N-1)}).

7. The method according to any one of the previous claims, wherein the method comprises the following step:
- determining the combined power loss of one or more of the switch pairs, in particular of each of the switch pairs, by determining the sum of the temperature of the first switch of the respective switch pair and the temperature of the second switch of the respective switch pair as an indicator for the combined power loss of the respective switch pair.

8. The method according to any one of the previous claims, wherein for reducing a portion of the DC voltage (Vin) distributed to a switch (S_{U1}; S_{L1}) that is electrically connected to the output terminal (OUT1), the method comprises the following step:
- controlling the switches (S_{U3}, S_{U2}, S_{U1}, S_{L1}, S_{L2}, S_{L3}) such that a capacitor unit (C1) of the one or more capacitor units (C1, C2) is charged below the respective third voltage level, wherein the capacitor unit (C1) is electrically connected to the first node of the first series connection (SC_{U}) and second node of the second series connection (SC_{L}) that are closest, in terms of the number of nodes, to the output terminal (OUT1).

9. The method according to claim 8, wherein
- the less the capacitor unit (C1) is charged below the respective third voltage level the more the portion of the DC voltage (Vin) distributed to the switch (S_{U1}; S_{L1}) is reduced.

10. The method according to claim 8 or 9, wherein for reducing the portion of the DC voltage (Vin) distributed to the switch (S_{U1}; S_{L1}), the method comprises the following step:
- controlling the switches (S_{U3}, S_{U2}, S_{U1}, S_{L1}, S_{L2}, S_{L3}) such that the capacitor unit (C1) of the one or more capacitor units gets charged or discharged below the respective third voltage level, optionally during the one or more transition phases.

11. The method according to claim 10, wherein
- the less the capacitor unit (C1) gets charged below the respective third voltage level the more the portion of the DC voltage (Vin) distributed to the switch (S_{U1}; S_{L1}) is reduced, or
- the more the capacitor unit (C1) gets discharged below the respective third voltage level the more the portion of the DC voltage (Vin) distributed to the switch (S_{U1}; S_{L1}) is reduced.

12. The method according to any one of the previous claims, wherein for reducing a portion of the DC voltage (Vin) distributed to a switch (S_{U2}; S_{L2}) that is electrically connected via one or more switches (S_{U1}; S_{L1}) to the output terminal (OUT1), the method comprises the following step:
- controlling the switches (S_{U3}, S_{U2}, S_{U1}, S_{L1}, S_{L2} S_{L3}) such that a first capacitor unit (C1) of the one or more capacitor units (C1, C2) is charged above the respective third voltage level, wherein the first capacitor unit (C1) is connected to a terminal of two terminals of the switch (S_{U2}; S_{L2}) that is closer, in terms of the number of nodes, to the output terminal (OUT1); and/or
- controlling the switches (S_{U3}, S_{U2}, S_{U1}, S_{L1}, S_{L2} S_{L3}) such that a second capacitor unit (C2) of the one or more capacitor units (C1, C2) is charged below the respective third voltage level, wherein the second capacitor unit (C2) is connected to the other terminal of the two terminals of the switch (S_{U2}; S_{L2}).

13. The method according to claim 12, wherein
- the more the first capacitor unit (C1) is charged above the respective third voltage level the more the portion of the DC voltage (Vin) distributed to the switch (S_{U2}; S_{L2}) is reduced; and/or
- the less the second capacitor unit (C2) is charged below the respective third voltage level the more the portion of the DC voltage (Vin) distributed to the switch (S_{U2}; S_{L2}) is reduced.

14. The method according to claim 12 or 13, wherein for reducing the portion of the DC voltage (Vin) distributed to the switch (S_{U2}; S_{L2}), the method comprises the following step:
- controlling the switches (S_{U3}, S_{U2}, S_{U1}, S_{L1}, S_{L2} S_{L3}) such that the first capacitor unit (C1) of the one or more capacitor units (C1, C2) gets charged above the respective third voltage level, optionally during the one or more transition phases; and/or
- controlling the switches (S_{U3}, S_{U2}, S_{U1}, S_{L1}, S_{L2} S_{L3}) such that the second capacitor unit (C2) of the one or more capacitor units (C1, C2) gets charged or discharged below the respective third voltage level, optionally during the one or more transition phases.

## Patentansprüche

1. Verfahren zum Betrieb eines Wandlers mit mehrstufigem fliegenden Kondensator (1), wobei
- der Wandler (1) Folgendes umfasst:
- einen ersten und einen zweiten Eingangsanschluss (IN1, IN2) zum Empfangen einer DC-Spannung (Vin),
- einen Ausgangsanschluss (OUT1) zum Bereitstellen einer Ausgangsspannung (Vout), die zwischen einem ersten Spannungspegel (V_{IN1}) und einem zweiten Spannungspegel (V_{IN2}) variabel ist,
- eine erste und eine zweite Reihenschaltung (SC_{U}, SC_{L}), die jeweils Folgendes umfassen:
zwei oder mehr Schalter (S_{U(N-1)}, S_{U1}; S_{L1}, S_{L(N-1)}), bei denen es sich um Halbleiterschalter handelt, und
- eine oder mehrere Kondensatoreinheiten (C1), wobei
- der erste Eingangsanschluss (IN1) über die erste Reihenschaltung (SC_{U}) der zwei oder mehr Schalter (S_{U(N-1)}, S_{U1}) elektrisch mit dem Ausgangsanschluss (OUT1) verbunden ist,
- der zweite Eingangsanschluss (IN2) über die zweite Reihenschaltung (SC_{L}) der zwei oder mehr Schalter (S_{L1}, S_{L(N-1)}) elektrisch mit dem Ausgangsanschluss (OUT1) verbunden ist,
- jede der einen oder mehreren Kondensatoreinheiten (C1) elektrisch einen ersten Knoten zwischen zwei Schaltern der ersten Reihenschaltung (SC_{U}) und einen zweiten Knoten zwischen zwei Schaltern der zweiten Reihenschaltung (SC_{L}) miteinander verbindet, wobei die Anzahl der Knoten zwischen dem ersten Knoten und dem Ausgangsanschluss (OUT1) und die Anzahl der Knoten zwischen dem zweiten Knoten und dem Ausgangsanschluss (OUT1) zueinander gleich sind, und
- die DC-Spannung (Vin) gleichmäßig an die Schalter (S_{U(N-1)}, S_{U1}, S_{L1}, S_{L(N-1)}) der ersten und zweiten Reihenschaltung (SC_{U}, SC_{L}) verteilt wird, indem die Schalter (S_{U(N-1)}, S_{U1}, S_{L1}, S_{L(N-1)}) so gesteuert werden, dass jede der einen oder mehreren Kondensatoreinheiten (C1) auf einen jeweiligen dritten Spannungspegel aufgeladen wird; und
- wobei das Verfahren den folgenden Schritt umfasst:
- Ausgleichen von unterschiedlichen Leistungsverlusten der Schalter (S_{U(N-1)}, S_{U1}, S_{L1}, S_{L(N-1)}), indem die Schalter (S_{U(N-1)}, S_{U1}, S_{L1}, S_{L(N-1)}) so gesteuert werden, dass
- eine oder mehrere der einen oder mehreren Kondensatoreinheiten (C1) über den jeweiligen dritten Spannungspegel aufgeladen werden und/oder
- eine oder mehrere der einen oder mehreren Kondensatoreinheiten (C1) unter den jeweiligen dritten Spannungspegel aufgeladen werden,
sodass die DC-Spannung (Vin) nicht gleichmäßig an die Schalter (S_{U(N-1)}, S_{U1}, S_{L1}, S_{L(N-1)}) verteilt wird, wobei das Verfahren ferner die folgenden Schritte umfasst:
- Bestimmen des kombinierten Leistungsverlusts jedes Schalterpaars, das einen ersten Schalter der ersten Reihenschaltung (SC_{U}) und einen zweiten Schalter der zweiten Reihenschaltung (SC_{L}) umfasst, wobei die Anzahl der Schalter zwischen dem ersten Schalter und dem Ausgangsanschluss (OUT1) und die Anzahl der Schalter zwischen dem zweiten Schalter und dem Ausgangsanschluss (OUT1) jeweils zueinander gleich sind;
- Bestimmen eines Schalterpaars mit dem höchsten kombinierten Leistungsverlust unter den kombinierten Leistungsverlusten der Schalterpaare der ersten und zweiten Reihenschaltung (SC_{U}, SC_{L}); und
- Steuern der Schalter (S_{U(N-1)}, S_{U1}, S_{L1}, S_{L(N-1)}), sodass ein Anteil der DC-Spannung (Vin), der an den ersten und zweiten Schalter des Schalterpaars mit dem höchsten kombinierten Leistungsverlust verteilt wird, reduziert wird.

2. Verfahren nach Anspruch 1, wobei das Verfahren den folgenden Schritt umfasst:
- Ausgleichen der unterschiedlichen Leistungsverluste der Schalter (S_{U(N-1)}, S_{U1}, S_{L1}, S_{L(N-1)}), indem die Schalter (S_{U(N-1)}, S_{U1}; S_{L1}, S_{L(N-1)}) so gesteuert werden, dass
- eine oder mehrere der einen oder mehreren Kondensatoreinheiten (C1) über den jeweiligen dritten Spannungspegel aufgeladen werden und/oder
- eine oder mehrere der einen oder mehreren Kondensatoreinheiten (C1) unter den jeweiligen dritten Spannungspegel aufgeladen oder entladen werden;
gegebenenfalls während einer oder mehrerer Übergangsphasen zwischen einem ersten stationären Zustand des Wandlers (1), bei dem die Ausgangsspannung (Vout) gleich dem ersten Spannungspegel (V_{IN1}) ist, und einem zweiten stationären Zustand des Wandlers (1), bei dem die Ausgangsspannung (Vout) gleich dem zweiten Spannungspegel (V_{IN2}) ist.

3. Verfahren nach Anspruch 1 oder 2, wobei das Verfahren den folgenden Schritt umfasst:
- Bestimmen des Leistungsverlusts eines oder mehrerer der Schalter (S_{U(N-1)}, S_{U1}, S_{L1}, S_{L(N-1)}), insbesondere jedes der Schalter, durch Messen der Temperatur des jeweiligen Schalters als Indikator für den Leistungsverlust des jeweiligen Schalters.

4. Verfahren nach einem der vorstehenden Ansprüche, wobei das Verfahren die folgenden Schritte umfasst:
- Bestimmen eines Schalters mit dem höchsten Leistungsverlust unter den Leistungsverlusten der Schalter (S_{U(N-1)}, S_{U1}, S_{L1}, S_{L(N-1)}); und
- Steuern der Schalter (S_{U(N-1)}, S_{U1}, S_{L1}, S_{L(N-1)}), sodass ein Anteil der DC-Spannung (Vin) an den Schalter mit dem höchsten kombinierten Leistungsverlust verteilt wird.

5. Verfahren nach Anspruch 4, wobei das Verfahren den folgenden Schritt umfasst:
- Steuern der Schalter (S_{U(N-1)}, S_{U1}, S_{L1}, S_{L(N-1)}), sodass der Anteil der DC-Spannung (Vin), der an den Schalter mit dem höchsten Leistungsverlust verteilt wird, reduziert wird und der Rest der DC-Spannung (Vin) gleichmäßig an den Rest der Schalter verteilt wird.

6. Verfahren nach einem der vorstehenden Ansprüche, wobei das Verfahren den folgenden Schritt umfasst:
- Steuern der Schalter (S_{U(N-1)}, S_{U1}, S_{L1}, S_{L(N-1)}), sodass der Anteil der DC-Spannung (Vin), der an den ersten Schalter und zweiten Schalter des Schalterpaars mit dem höchsten Leistungsverlust verteilt wird, reduziert wird und der Rest der DC-Spannung (Vin) gleichmäßig an den Rest der Schalter (S_{U(N-1)}, S_{U1}, S_{L1}, S_{L(N-1)}) verteilt wird.

7. Verfahren nach einem der vorstehenden Ansprüche, wobei das Verfahren den folgenden Schritt umfasst:
- Bestimmen des kombinierten Leistungsverlusts eines oder mehrerer der Schalterpaare, insbesondere jedes einzelnen der Schalterpaare, durch Bestimmen der Summe aus der Temperatur des ersten Schalters des jeweiligen Schalterpaars und der Temperatur des zweiten Schalters des jeweiligen Schalterpaars als Indikator für den kombinierten Leistungsverlust des jeweiligen Schalterpaars.

8. Verfahren nach einem der vorstehenden Ansprüche, wobei zum Reduzieren eines Anteils der DC-Spannung (Vin), der an einen Schalter (S_{U1}; S_{L1}) verteilt wird, der elektrisch mit dem Ausgangsanschluss (OUT1) verbunden ist, das Verfahren den folgenden Schritt umfasst:
- Steuern der Schalter (S_{U3}, S_{U2}, S_{U1}, S_{L1}, S_{L2}, S_{L3}), sodass eine Kondensatoreinheit (C1) der einen oder mehreren Kondensatoreinheiten (C1, C2) unter den jeweiligen dritten Spannungspegel aufgeladen wird, wobei die Kondensatoreinheit (C1) elektrisch mit dem ersten Knoten der ersten Reihenschaltung (SC_{U}) und dem zweiten Knoten der zweiten Reihenschaltung (SC_{L}) verbunden ist, die hinsichtlich der Anzahl der Knoten dem Ausgangsanschluss (OUT1) am nächsten liegen.

9. Verfahren nach Anspruch 8, wobei
- je weniger die Kondensatoreinheit (C1) unter den jeweiligen dritten Spannungspegel aufgeladen wird, desto mehr der Anteil der DC-Spannung (Vin), der an den Schalter (S_{U1}; S_{L1}) verteilt wird, reduziert wird.

10. Verfahren nach Anspruch 8 oder 9, wobei zum Reduzieren des Anteils der DC-Spannung (Vin), der an den Schalter (S_{U1}; S_{L1}) verteilt wird, das Verfahren den folgenden Schritt umfasst:
- Steuern der Schalter (S_{U3}, S_{U2}, S_{U1}, S_{L1}, S_{L2}, S_{L3}), sodass die Kondensatoreinheit (C1) der einen oder mehreren Kondensatoreinheiten unter den jeweiligen dritten Spannungspegel aufgeladen oder entladen wird, gegebenenfalls während der einen oder mehreren Übergangsphasen.

11. Verfahren nach Anspruch 10, wobei
- je weniger die Kondensatoreinheit (C1) unter den jeweiligen dritten Spannungspegel aufgeladen wird, desto mehr der Anteil der DC-Spannung (Vin), der an den Schalter (S_{U1}; S_{L1}) verteilt wird, reduziert wird, oder
- je mehr die Kondensatoreinheit (C1) unter den jeweiligen dritten Spannungspegel entladen wird, desto mehr der Anteil der DC-Spannung (Vin), der an den Schalter (S_{U1}; S_{L1}) verteilt wird, reduziert wird.

12. Verfahren nach einem der vorstehenden Ansprüche, wobei zum Reduzieren eines Anteils der DC-Spannung (Vin), der an einen Schalter (S_{U2}; S_{L2}) verteilt wird, der über einen oder mehrere Schalter (S_{U1}; S_{L1}) elektrisch mit dem Ausgangsanschluss (OUT1) verbunden ist, das Verfahren den folgenden Schritt umfasst:
- Steuern der Schalter (S_{U3}, S_{U2}, S_{U1}, S_{L1}, S_{L2}, S_{L3}), sodass eine erste Kondensatoreinheit (C1) der einen oder mehreren Kondensatoreinheiten (C1, C2) über den jeweiligen dritten Spannungspegel aufgeladen wird, wobei die erste Kondensatoreinheit (C1) mit einem Anschluss der zwei Anschlüsse des Schalters (S_{U2}; S_{L2}) verbunden ist, der hinsichtlich der Anzahl der Knoten dem Ausgangsanschluss (OUT1) näher liegt; und/oder
- Steuern der Schalter (S_{U3}, S_{U2}, S_{U1}, S_{L1}, S_{L2}, S_{L3}), sodass eine zweite Kondensatoreinheit (C2) der einen oder mehreren Kondensatoreinheiten (C1, C2) unter den jeweiligen dritten Spannungspegel aufgeladen wird, wobei die zweite Kondensatoreinheit (C2) mit dem anderen Anschluss der zwei Anschlüsse des Schalters (S_{U2}; S_{L2}) verbunden ist.

13. Verfahren nach Anspruch 12, wobei,
- je mehr die erste Kondensatoreinheit (C1) über den jeweiligen dritten Spannungspegel aufgeladen wird, desto mehr der Anteil der DC-Spannung (Vin), der an den Schalter (S_{U2}; S_{L2}) verteilt wird, reduziert wird; und/oder
- je weniger die zweite Kondensatoreinheit (C2) unter den jeweiligen dritten Spannungspegel aufgeladen wird, desto mehr der Anteil der DC-Spannung (Vin), der an den Schalter (S_{U2}; S_{L2}) verteilt wird, reduziert wird.

14. Verfahren nach Anspruch 12 oder 13, wobei zum Reduzieren des Anteils der DC-Spannung (Vin), der an den Schalter (S_{U2}; S_{L2}) verteilt wird, das Verfahren den folgenden Schritt umfasst:
- Steuern der Schalter (S_{U3}, S_{U2}, S_{U1}, S_{L1}, S_{L2}, S_{L3}), sodass die Kondensatoreinheit (C1) der einen oder mehreren Kondensatoreinheiten (C1, C2) über den jeweiligen dritten Spannungspegel aufgeladen wird, gegebenenfalls während der einen oder mehreren Übergangsphasen; und/oder
- Steuern der Schalter (S_{U3}, S_{U2}, S_{U1}, S_{L1}, S_{L2}, S_{L3}), sodass die Kondensatoreinheit (C2) der einen oder mehreren Kondensatoreinheiten (C1, C2) unter den jeweiligen dritten Spannungspegel aufgeladen oder entladen wird, gegebenenfalls während der einen oder mehreren Übergangsphasen.

## Revendications

1. Méthode de fonctionnement d'un convertisseur multiniveaux à condensateurs volants (1), dans laquelle
- le convertisseur (1) comprend :
- une première et une seconde borne d'entrée (IN1, IN2) pour recevoir une tension CC (Vin),
- une borne de sortie (OUT1) pour fournir une tension de sortie (Vout) variable entre un premier niveau de tension (V_{IN1}) et un second niveau de tension (V_{IN2}),
- une première et une seconde connexion en série (SC_{U}, SC_{L}) comprenant chacune
deux commutateurs ou plus (S_{U(N-1)}, S_{U1} ; S_{L1}, S_{L(N-1)}) qui sont des commutateurs à semi-conducteurs, et
- une ou plusieurs unités de condensateur (C1), dans laquelle
- la première borne d'entrée (IN1) est électriquement connectée via la première connexion en série (SC_{U}) des deux commutateurs ou plus (S_{U(N-1)}, S_{U1}) à la borne de sortie (OUT1),
- la seconde borne d'entrée (IN2) est électriquement connectée via la seconde connexion en série (SC_{L}) des deux commutateurs ou plus (S_{L1}, S_{L(N-1)}) à la borne de sortie (OUT1),
- chacune des une ou plusieurs unités de condensateur (C1) connecte électriquement un premier nœud entre deux commutateurs de la première connexion en série (SC_{U}) et un second nœud entre deux commutateurs de la seconde connexion en série (SC_{L}), dans laquelle le nombre de nœuds entre le premier nœud et la borne de sortie (OUT1) et le nombre de nœuds entre le second nœud et la borne de sortie (OUT1) sont égaux l'un à l'autre, et
- la tension CC (Vin) est distribuable de manière égale aux commutateurs (S_{U(N-1)}, S_{U1}, S_{L1}, S_{L(N-1)}) des première et seconde connexions en série (SC_{U}, SC_{L}) par la commande des commutateurs (S_{U(N-1)}, S_{U1}, S_{L1}, S_{L(N-1)}) de sorte que chacune des une ou plusieurs unités de condensateur (C1) est chargée à un troisième niveau de tension respectif ; et
- la méthode comprend l'étape suivante :
- la compensation de différentes pertes de puissance des commutateurs (S_{U(N-1)}, S_{U1}, S_{L1}, S_{L(N-1)}) par la commande des commutateurs (S_{U(N-1)}, S_{U1}, S_{L1}, S_{L(N-1)}) de sorte que
- une ou plusieurs des une ou plusieurs unités de condensateur (C1) sont chargées au-dessus du troisième niveau de tension respectif, et/ou
- une ou plusieurs des une ou plusieurs unités de condensateur (C1) sont chargées en dessous du troisième niveau de tension respectif,
de sorte que la tension CC (Vin) n'est pas distribuée de manière égale aux commutateurs (S_{U(N-1)}, S_{U1}, S_{L1}, S_{L(N-1)}), dans laquelle la méthode comprend en outre les étapes suivantes :
- la détermination d'une perte de puissance combinée de chaque paire de commutateurs comprenant un premier commutateur de la première connexion en série (SC_{U}) et un second commutateur de la seconde connexion en série (SC_{L}), dans laquelle le nombre de commutateurs entre le premier commutateur et la borne de sortie (OUT1) et le nombre de commutateurs entre le second commutateur et la borne de sortie (OUT1) sont égaux l'un à l'autre ;
- la détermination d'une paire de commutateurs présentant la perte de puissance combinée la plus élevée parmi les pertes de puissance combinées des paires de commutateurs de la première et de la seconde connexion en série (SC_{U}, SC_{L}) ; et
- la commande des commutateurs (S_{U(N-1)}, S_{U1}, S_{L1}, S_{L(N-1)}) de sorte qu'une partie de la tension CC (Vin) distribuée au premier commutateur et au second commutateur de la paire de commutateurs présentant la perte de puissance combinée la plus élevée est réduite.

2. Méthode selon la revendication 1, dans laquelle la méthode comprend l'étape suivante :
- la compensation de différentes pertes de puissance des commutateurs (S_{U(N-1)}, S_{U1}, S_{L1}, S_{L(N-1)}) par la commande des commutateurs (S_{U(N-1)}, S_{U1}; S_{L1}, S_{L(N-1)}) de sorte que
- une ou plusieurs des une ou plusieurs unités de condensateur (C1) sont chargées au-dessus du troisième niveau de tension respectif, et/ou
- une ou plusieurs des une ou plusieurs unités de condensateur (C1) sont chargées ou déchargées en dessous du troisième niveau de tension respectif ;
éventuellement pendant une ou plusieurs phases de transition entre un premier état stable du convertisseur (1), dans laquelle la tension de sortie (Vout) est égale au premier niveau de tension (V_{IN1}), et un second état stable du convertisseur (1), dans laquelle la tension de sortie (Vout) est égale au second niveau de tension (V_{IN2}).

3. Méthode selon la revendication 1 ou 2, dans laquelle la méthode comprend l'étape suivante :
- la détermination de la perte de puissance d'un ou de plusieurs des commutateurs (S_{U(N-1)}, S_{U1}, S_{L1}, S_{L(N-1)}), en particulier de chacun des commutateurs, en mesurant la température du commutateur respectif en tant qu'indicateur de la perte de puissance du commutateur respectif.

4. Méthode selon l'une quelconque des revendications précédentes, dans laquelle la méthode comprend les étapes suivantes :
- la détermination d'un commutateur avec la perte de puissance la plus élevée parmi les pertes de puissance des commutateurs (SU(N-1), SU1, S_{L1}, S_{L(N-1)}) ; et
- la commande des commutateurs (S_{U(N-1)}, S_{U1}, S_{L1}, S_{L(N-1)}) de sorte qu'une partie de la tension CC (Vin) distribuée au commutateur présentant la perte de puissance la plus élevée est réduite.

5. Méthode selon la revendication 4, dans laquelle la méthode comprend l'étape suivante :
- la commande des commutateurs (S_{U(N-1)}, S_{U1}, S_{L1}, S_{L(N-1)}) de sorte que la partie de la tension CC (Vin) distribuée au commutateur présentant la perte de puissance la plus élevée est réduite et que le reste de la tension CC (Vin) est distribué de manière égale au reste des commutateurs.

6. Méthode selon l'une quelconque des revendications précédentes, dans laquelle la méthode comprend l'étape suivante :
- la commande des commutateurs (S_{U(N-1)}, S_{U1}, S_{L1}, S_{L(N-1)}) de sorte que la partie de la tension CC (Vin) distribuée au premier commutateur et au second commutateur de la paire de commutateurs présentant la perte de puissance combinée la plus élevée est réduite et que le reste de la tension CC (Vin) est distribué de manière égale au reste des commutateurs (S_{U(N-1)}, S_{U1}, S_{L1}, S_{L(N-1)}).

7. Méthode selon l'une quelconque des revendications précédentes, dans laquelle la méthode comprend l'étape suivante :
- la détermination de la perte de puissance combinée d'une ou de plusieurs des paires de commutateurs, en particulier de chacune des paires de commutateurs, par la détermination de la somme de la température du premier commutateur de la paire de commutateurs respective et de la température du second commutateur de la paire de commutateurs respective en tant qu'indicateur de la perte de puissance combinée de la paire de commutateurs respective.

8. Méthode selon l'une quelconque des revendications précédentes, dans laquelle, pour réduire une partie de la tension CC (Vin) distribuée à un commutateur (S_{U1} ; S_{L1}) qui est électriquement connecté à la borne de sortie (OUT1), la méthode comprend l'étape suivante :
- la commande des commutateurs (S_{U3}, S_{U2}, S_{U1}, S_{L1}, S_{L2}, S_{L3}) de sorte qu'une unité de condensateur (C1) des une ou plusieurs unités de condensateur (C1, C2) est chargée en dessous du troisième niveau de tension respectif, dans laquelle l'unité de condensateur (C1) est électriquement connectée au premier nœud de la première connexion en série (SC_{U}) et au second nœud de la seconde connexion en série (SC_{L}) qui sont les plus proches, en termes de nombre de nœuds, de la borne de sortie (OUT1).

9. Méthode selon la revendication 8, dans laquelle
- moins l'unité de condensateur (C1) est chargée en dessous du troisième niveau de tension respectif, plus la partie de la tension CC (Vin) distribuée au commutateur (S_{U1} ; S_{L1}) est réduite.

10. Méthode selon la revendication 8 ou 9, dans laquelle, pour réduire la partie de la tension CC (Vin) distribuée au commutateur (S_{U1} ; S_{L1}), la méthode comprend l'étape suivante :
- la commande des commutateurs (S_{U3}, S_{U2}, S_{U1}, S_{L1}, S_{L2}, S_{L3}) de sorte que l'unité de condensateur (C1) des une ou plusieurs unités de condensateur est chargée ou déchargée en dessous du troisième niveau de tension respectif, éventuellement pendant les une ou plusieurs phases de transition.

11. Méthode selon la revendication 10, dans laquelle
- moins l'unité de condensateur (C1) est chargée en dessous du troisième niveau de tension respectif, plus la partie de la tension CC (Vin) distribuée au commutateur (S_{U1} ; S_{L1}) est réduite, ou
- plus l'unité de condensateur (C1) est déchargée en dessous du troisième niveau de tension respectif, plus la partie de la tension CC (Vin) distribuée au commutateur (S_{U1} ; S_{L1}) est réduite.

12. Méthode selon l'une quelconque des revendications précédentes, dans laquelle, pour réduire une partie de la tension CC (Vin) distribuée à un commutateur (S_{U2} ; S_{L2}) qui est électriquement connecté via un ou plusieurs commutateurs (S_{U1} ; S_{L1}) à la borne de sortie (OUT1), la méthode comprend l'étape suivante :
- la commande des commutateurs (S_{U3}, S_{U2}, S_{U1}, S_{L1}, S_{L2} S_{L3}) de sorte qu'une première unité de condensateur (C1) des une ou plusieurs unités de condensateur (C1, C2) est chargée au-dessus du troisième niveau de tension respectif, dans laquelle la première unité de condensateur (C1) est connectée à une borne de deux bornes du commutateur (S_{U2} ; S_{L2}) la plus proche, en termes de nombre de nœuds, de la borne de sortie (OUT1) ; et/ou
- la commande des commutateurs (S_{U3}, S_{U2}, S_{U1}, S_{L1}, S_{L2}, S_{L3}) de sorte qu'une seconde unité de condensateur (C2) des une ou plusieurs unités de condensateur (C1, C2) est chargée en dessous du troisième niveau de tension respectif, dans laquelle la seconde unité de condensateur (C2) est connectée à l'autre borne des deux bornes du commutateur (S_{U2} ; S_{L2}).

13. Méthode selon la revendication 12, dans laquelle
- plus la première unité de condensateur (C1) est chargée au-dessus du troisième niveau de tension respectif, plus la partie de la tension CC (Vin) distribuée au commutateur (S_{U2} ; S_{L2}) est réduite ; et/ou
- moins la seconde unité de condensateur (C2) est chargée en dessous du troisième niveau de tension respectif, plus la partie de la tension CC (Vin) distribuée au commutateur (S_{U2} ; S_{L2}) est réduite.

14. Méthode selon la revendication 12 ou 13, dans laquelle, pour réduire la partie de la tension CC (Vin) distribuée au commutateur (S_{U2} ; S_{L2}), la méthode comprend l'étape suivante :
- la commande des commutateurs (S_{U3}, S_{U2}, S_{U1}, S_{L1}, S_{L2}, S_{L3}) de sorte que la première unité de condensateur (C1) des une ou plusieurs unités de condensateur (C1, C2) est chargée au-dessus du troisième niveau de tension respectif, éventuellement pendant les une ou plusieurs phases de transition ; et/ou
- la commande des commutateurs (S_{U3}, S_{U2}, S_{U1}, S_{L1}, S_{L2}, S_{L3}) de sorte que la seconde unité de condensateur (C2) des une ou plusieurs unités de condensateur (C1, C2) est chargée ou déchargée en dessous du troisième niveau de tension respectif, éventuellement pendant les une ou plusieurs phases de transition.
